# FASCICULE DE BREVET EUROPEEN

(11) **EP 3 138 169 B1**
(45) Date de publication et mention de la délivrance du brevet: **27.10.2021**
(21) Numéro de dépôt: 15723263.8
(22) Date de dépôt: 23.04.2015
(51) Int. Cl.: H02G 3/12

(54) **CONNECTEUR POUR APPAREILLAGE ÉLECTRIQUE LOGÉ DANS UNE BOÎTE ENCASTRÉE**
VERBINDER FÜR ELEKTRISCHE VORRICHTUNG IN EINER EINGELASSENEN BOX
CONNECTOR FOR AN ELECTRICAL DEVICE HOUSED IN A RECESSED BOX

(30) Priorité: 28.04.2014 FR 1453832
(43) Date de publication de la demande: 08.03.2017
(73) Titulaire: Legrand France, 87000 Limoges (FR); Legrand SNC, 87000 Limoges (FR)
(72) Inventeur: MAZIERE, Laurent, F-87220 Feytiat (FR); CAILLE, Jean-Loup, F-87510 Peyrilhac (FR); LONGEVILLE, Jérôme, F-87350 Panazol (FR); CHAUMENY, Jean-Luc, 87590 Saint Just Le Martel (FR)
(74) Mandataire: Jacobacci Coralis Harle
(86) Numéro de dépôt international: PCT/FR2015/051103
(87) Numéro de publication internationale: WO 2015/166170

(56) Documents cités:
- EP-A1- 2 006 967
- EP-A1- 2 068 411
- DE-U1- 9 106 123
- DE-U1-202007 012 109
- FR-A1- 2 730 354
- US-A- 3 879 101
- US-A- 4 669 804
- US-A- 4 847 444
- US-A1- 2005 272 304

## Description

### DOMAINE TECHNIQUE AUQUEL SE RAPPORTE L'INVENTION

La présente invention concerne de manière générale la mise en place d'un appareillage électrique dans une boîte électrique à encastrer dans une paroi et la connexion de cet appareillage électrique.

Elle concerne plus particulièrement un ensemble tel que défini dans le préambule de la revendication 1 ou 3.

### ARRIERE-PLAN TECHNOLOGIQUE

Généralement, une boîte électrique comporte, intérieurement, des moyens d'assujettissement d'un appareillage électrique, et, extérieurement, des moyens de fixation à une paroi.

Une boîte électrique ordinaire comporte en outre en partie arrière des opercules défonçables qui permettent d'ouvrir localement le fond de la boîte pour introduire dans son volume intérieur des gaines de cheminement d'où émergent les conducteurs électriques nécessaires à la desserte de l'appareillage électrique.

Ces boîtes électriques présentent des tailles standard. Ainsi, couramment, une boîte électrique circulaire à encastrer présente un diamètre standard de 68 millimètres et une profondeur usuelle de 40 millimètres.

Le volume intérieur d'une telle boîte électrique est alors réduit et il n'est pas aisé d'y loger non seulement l'appareillage électrique, mais également l'extrémité de la gaine de cheminement et les extrémités des conducteurs électriques qui ont été tirées dans le volume intérieur de la boîte électrique, du fait notamment de la rigidité des conducteurs électriques qu'il faut replier entre l'appareillage électrique et le fond de la boîte.

Ce faible volume intérieur restreint dès lors les possibilités d'évolution des appareillages électriques qui, du fait de leurs tailles limitées, ne peuvent en effet pas intégrer toutes les fonctions souhaitées.

Une solution actuellement utilisée pour loger des appareillages électriques volumineux consiste alors à prévoir deux boîtes électriques l'une à côté de l'autre, dont l'une loge l'appareillage électrique tandis que l'autre loge les conducteurs électriques.

Cette solution s'avère toutefois onéreuse et fastidieuse à mettre en œuvre.

Une autre solution est décrite dans le document EP2068411. Cette autre solution consiste à utiliser une boîte électrique qui accueille, au travers d'une fenêtre pratiquée dans son fond, un connecteur adapté à faciliter la connexion de l'appareillage électrique aux conducteurs électriques issus de la gaine de cheminement. Ce connecteur comporte à cet effet des bornes électriques accessibles depuis l'intérieur de la boîte pour la connexion de l'appareillage électrique, ainsi qu'une partie de câble à connecter aux conducteurs électriques.

Cette solution évite d'avoir à introduire les conducteurs électriques et les gaines de cheminement dans le volume intérieur de la boîte électrique, ce qui permet d'offrir davantage d'espace à l'appareillage électrique.

L'inconvénient majeur de cette solution est qu'elle ne permet pas de bloquer l'extrémité d'une gaine de cheminement contre la boîte. Cette solution impose donc soit de faire toute l'installation électrique avec des câbles électriques du genre comportant des fils électriques isolés noyés dans une gaine isolante (ce qui s'avère plus onéreux qu'utiliser des gaines de cheminement dans lesquelles sont librement tirés des fils électriques isolés), soit de prévoir des moyens onéreux pour créer une liaison entre le câble électrique et une gaine de cheminement.

On connaît par ailleurs du document US3879101 un appareillage électrique à engager dans une boîte d'encastrement au fond de laquelle est prévue une ouverture d'entrée de câble. Cet appareillage électrique se présente en deux parties, dont une partie fonctionnelle avant, et une partie de connexion arrière.

Dans ce document, la partie de connexion arrière facilite le changement de la partie avant de connexion, mais elle ne permet pas d'augmenter le volume disponible dans la boîte pour y rapporter des mécanismes volumineux. Il demeure en effet nécessaire de prévoir de la place dans la boîte pour la connexion des fils électriques à la partie de connexion.

On connaît du document EP4847444 une boîte électrique en deux parties, dont une partie arrière en forme de U et une partie avant parallélépipédique. Dans ce document, la boîte est dépourvue de moyens de connexion électrique.

On connaît du document DE202007012109 une entretoise pour spot de lumière à encastrer dans un plafond, permettant de soulever l'isolant placé au-dessus du plafond de façon à délimiter une cavité permettant d'éviter une surchauffe du spot. Cette entretoise n'est toutefois pas conçue pour recevoir entre ses bras une boîte électrique.

On connaît du document EP2006967 un appareillage électrique à engager dans une boîte électrique encastrée dans une paroi. Cet appareillage comporte deux broches de terre incurvées en forme de S et un enjoliveur présentant deux fentes le long desquelles les broches de terre peuvent se placer. Ces broches ne comportent pas de moyens de fixation à la paroi.

On connaît du document US20050272304 un système de distribution électrique comportant une prise de courant et un module de connexion. Le module de connexion est prévu pour être placé au fond d'une boite électrique encastré dans une paroi et pour s'y attacher au moyen de deux bras. Dans ce document, le socle n'est pas prévu pour se fixer à la paroi et pour se placer à l'arrière de la boîte électrique.

On connaît du document FR2730354 un élément d'accrochage pour boîte électrique. Dans ce document, l'élément d'accrochage est dépourvu de moyen de connexion électrique.

On connaît du document US4669804 un appareillage électrique comportant un mécanisme d'appareillage adapté à être logé dans une boîte électrique particulière, en ce sens que cette boîte est équipée de bornes de connexion au réseau électrique local. Cet appareillage permet, d'une part, un montage aisé de la boîte électrique, et, d'autre part, un remplacement pratique et sans danger du mécanisme d'appareillage.

### OBJET DE L'INVENTION

Afin de remédier aux inconvénients précités de l'état de la technique, la présente invention propose une solution qui, d'une part, évite d'avoir à introduire les conducteurs électriques et les gaines de cheminement dans le volume intérieur de la boîte électrique, et, d'autre part, permet de monter et démonter aisément la boîte électrique dans la paroi.

Plus particulièrement, on propose selon l'invention un ensemble tel que défini dans la revendication 1 ou 3.

Ainsi, le connecteur est prévu pour se fixer, non pas à la boîte électrique, mais plutôt à la paroi elle-même. Il est ainsi susceptible d'être mis en place avant la boîte électrique. Une fois en place, il peut accueillir entre ses bras la boîte électrique.

De ce fait, grâce à l'invention, il est possible de retirer la boîte électrique de la paroi sans entraîner avec celle-ci les gaines de cheminement et les conducteurs électriques, puisque ces derniers sont fixés au connecteur. L'extraction et l'engagement de la boîte dans ou hors de la paroi peut alors se faire sans difficulté.

Un autre avantage de ce connecteur est qu'il laisse accès, lorsqu'il est en place sur la paroi, aux gaines de cheminement, via l'espace situé entre le socle et la paroi. Il est ainsi possible de refouler dans la direction souhaitée les gaines de cheminement, ce qui facilite l'installation du connecteur.

Par ailleurs, puisque la connexion des gaines de cheminement s'effectue sur le connecteur, la boîte électrique permet d'assurer une isolation thermique entre l'intérieur et l'extérieur de la paroi afin de répondre aux normes en vigueur (en France, aux normes BBC pour « bâtiment à basse consommation »).

Ce connecteur présente également l'avantage d'assurer une bonne isolation électrique puisque, en l'absence d'appareillage électrique dans la boite électrique, les bornes de connexion électrique du connecteur demeurent cachées à l'arrière de la boîte électrique.

Préférentiellement, la paroi de fond est bordée à l'avant par un rebord périphérique, et les bras sont situés dans le prolongement du rebord périphérique.

L'invention porte également sur un connecteur comportant un socle en deux parties.

Dans ce mode de réalisation, il est prévu un support (qui porte les bras) et une cassette (qui porte les éléments de connexion). La cassette est amovible par rapport au support, si bien qu'il est possible d'utiliser le même support pour différentes applications, en lui adjoignant une cassette particulière correspondant à l'application souhaitée.

Dans un mode particulier de l'invention, la paroi périphérique délimite au moins deux ouvertures principales identiques, et il est prévu au moins trois bras distincts.

Préférentiellement, lesdits moyens d'accrochage sont des moyens d'encliquetage déverrouillables, qui facilitent le remplacement d'un fond par un autre.

D'autres caractéristiques avantageuses et non limitatives des ensembles précités sont définies dans les revendications 2, 4 et 5 à 29.

L'invention concerne aussi un procédé de montage tel que défini dans les revendications 30 et 31.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un connecteur selon un premier mode de réalisation de l'invention et d'une boîte électrique à rapporter sur une paroi,
- la figure 2 est une vue schématique en perspective assemblée du connecteur et de la boîte électrique de la figure 1,
- la figure 3 est une vue schématique arrière en perspective du socle du connecteur de la figure 1,
- la figure 4 est une vue schématique en perspective de l'embout et du socle du connecteur de la figure 1, ainsi que d'une gaine de cheminement,
- la figure 5 est une vue schématique en coupe de l'embout et du socle du connecteur de la figure 1,
- la figure 6 est une vue schématique en perspective d'une variante de réalisation de l'embout de la figure 4,
- la figure 7 est une vue schématique en perspective de l'embout de la figure 6 monté sur le socle de la figure 4 ;
- la figure 8 est une vue schématique en perspective éclatée du socle, des éléments de connexion et des leviers de manœuvre du connecteur de la figure 1,
- la figure 9 est une vue schématique en coupe du connecteur de la figure 1,
- les figures 10 à 14 illustrent différentes étapes de montage du connecteur et de la boîte électrique dans la paroi de la figure 1,
- les figures 15 et 16 sont des vues schématiques en perspective d'une variante de réalisation du connecteur de la figure 1,
- la figure 17 est une vue schématique en perspective d'une variante de réalisation du connecteur de la figure 1,
- la figure 18 est une vue schématique en perspective de l'embout du connecteur de la figure 17,
- la figure 19 est une vue en coupe selon le plan A-A de la figure 18,
- la figure 20 est une vue schématique en perspective du capot du connecteur de la figure 17,
- la figure 21 est une vue schématique en perspective d'une variante de réalisation de la boîte électrique de la figure 1,
- la figure 22 est une vue en coupe de la boîte électrique de la figure 21,
- la figure 23 est une vue de détail de la zone XXIII de la figure 22,
- la figure 24 est une vue schématique en perspective d'une autre variante de réalisation du connecteur de la figure 1,
- les figures 25 et 26 sont des vues schématiques en perspective d'un autre mode de réalisation de l'embout, représenté sous deux angles différents, qui est adapté à se fixer au connecteur de la figure 24,
- les figures 27 et 28 sont des vues schématiques en perspective éclatée de l'embout des figures 25 et 26,
- la figure 29 est une vue schématique en perspective éclatée d'un connecteur selon un second mode de réalisation de l'invention, représenté avec un support et deux fonds, et d'une boîte électrique à rapporter dans une paroi,
- les figures 30 à 34 sont des vues schématiques en perspective de cinq fonds de formes différentes, susceptibles d'être utilisés dans le support du connecteur de la figure 29,
- la figure 35 est une vue schématique en perspective d'une première variante de réalisation du support de la figure 29,
- la figure 36 est une vue schématique en perspective assemblée du support de la figure 35 avec deux fonds, ceux représentés sur les figures 30 et 33,
- la figure 37 est une vue schématique en perspective d'une seconde variante de réalisation du support de la figure 29, et
- la figure 38 est une vue schématique en perspective assemblée du support de la figure 37 avec trois fonds, ceux représentés sur les figures 30, 31 et 32.

En préliminaire on notera que les éléments identiques ou similaires des différentes variantes de réalisation de l'invention représentés sur les différentes figures seront, dans la mesure du possible, référencés par les mêmes signes de référence et ne seront pas décrits à chaque fois.

L'installation d'un appareillage électrique en position encastrée dans une paroi nécessite de ménager une cavité dans cette paroi.

On considérera ici que la paroi qui accueille l'appareillage électrique est une cloison creuse. Bien entendu, l'appareillage électrique pourrait être installé sur un autre type de paroi, tel que par exemple une paroi maçonnée.

On rappelle que, de manière connue, une cloison creuse est généralement composée d'une ossature métallique (formée de montants verticaux et de rails horizontaux non représentés) et de panneaux de plâtre rapportés sur l'une au moins des deux faces de l'ossature métallique.

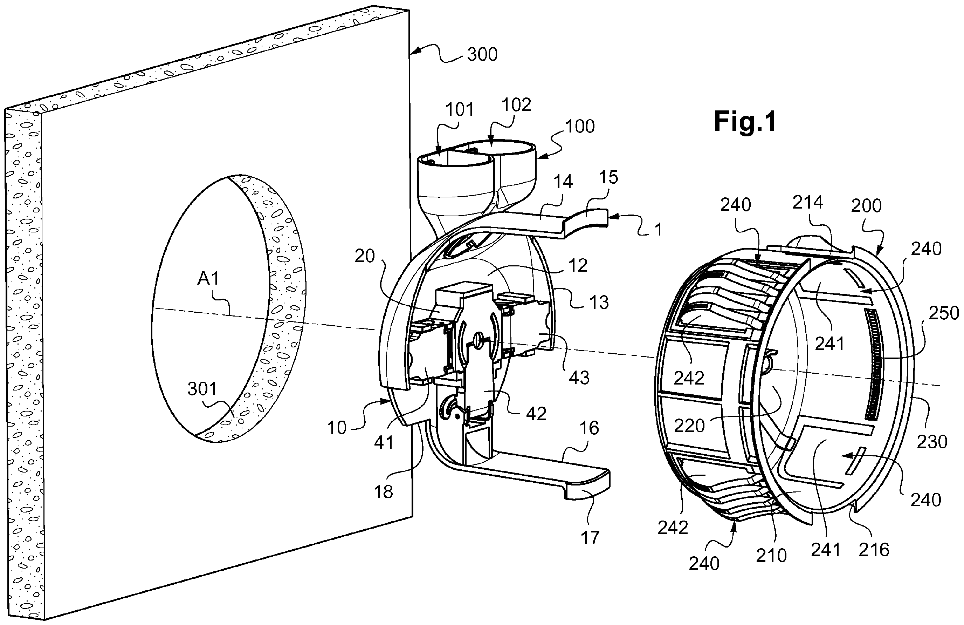

Comme le montre la figure 1, la cavité pratiquée dans cette cloison creuse est ici simplement formée par une ouverture circulaire 301 réalisée à la scie cloche dans l'un des panneaux de plâtre 300 de la cloison creuse.

Dans la description, les termes « avant » et « arrière » seront alors utilisés par rapport à la direction du regard de l'installateur de l'appareillage électrique dans cette ouverture circulaire 301. Ainsi, les termes avant et arrière désigneront respectivement le lieu tourné vers l'extérieur de la cloison creuse et le lieu tourné vers l'intérieur de la cloison creuse.

L'invention ne portant pas sur l'appareillage électrique, ce dernier n'a pas été représenté sur les figures. Il pourrait par exemple s'agir d'un interrupteur, d'une prise de courant, d'un va-et-vient, d'un variateur électrique, d'une prise réseau (RJ45), d'une prise de téléphone (RJ11), d'une prise informatique (USB), d'une prise vidéo (VDI, c'est-à-dire « voix, données, image »), d'un voyant, ou encore d'un détecteur (de fumée, d'inondation, de température, de mouvement ou de lumière).

On retiendra seulement que cet appareillage électrique comportera préférentiellement en face arrière des moyens pour permettre sa connexion au réseau électrique local et/ou au réseau de données local. Ici, ces moyens seront constitués par trois ou quatre broches plates s'étendant vers l'arrière.

Le réseau électrique local peut être acheminé par divers moyens, par exemple via des conducteurs électriques en cuivre.

En variante, il pourra être acheminé autrement, par exemple par un câble spécifique (câble vidéo, ...) ou par une fibre optique. Dans cette variante, ce câble sera alors prévu pour se brancher directement à l'arrière de l'appareillage électrique, dans un bornier de forme correspondante.

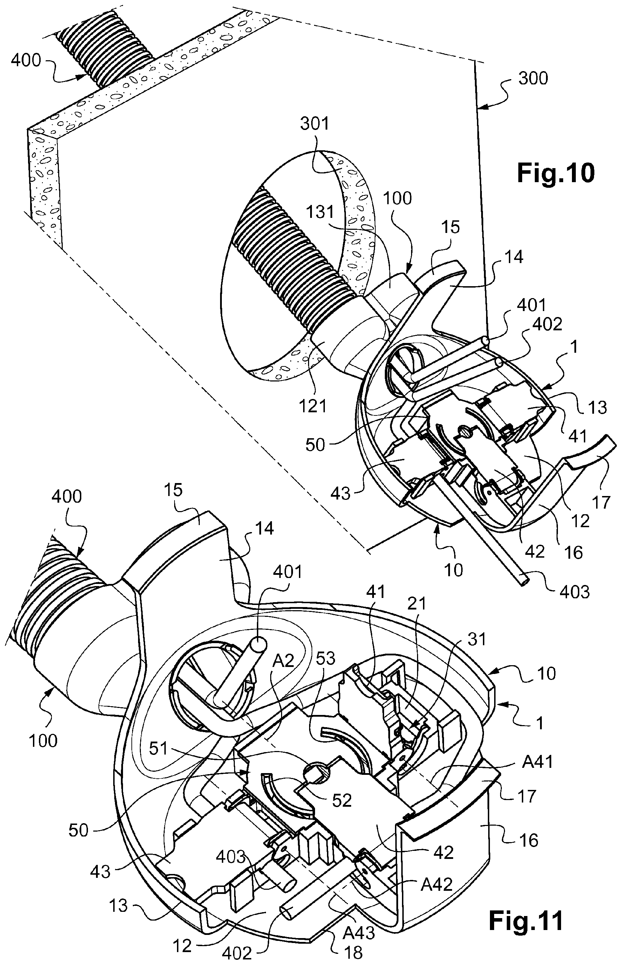

Ici, comme le montre la figure 10, le réseau électrique local est ici acheminé par trois conducteurs électriques 401, 402, 403 (de phase, de terre et de neutre) dont les extrémités libres débouchent d'une gaine de cheminement 400.

En pratique, ces conducteurs électriques sont des fils électriques gainés 401, 402, 403, par exemple des fils de cuivre recouverts d'une enveloppe plastique. La gaine de cheminement 400 est quant à elle du type souple et annelée. Elle comporte une paroi tubulaire formée d'une succession d'anneaux qui délimitent entre eux des gorges.

Telle que représentée sur les figures, cette gaine de cheminement 400 est logée à l'intérieur de la cloison creuse, de telle manière que son extrémité libre puisse être tirée au travers de l'ouverture circulaire 301 pratiquée dans le panneau de plâtre 300.

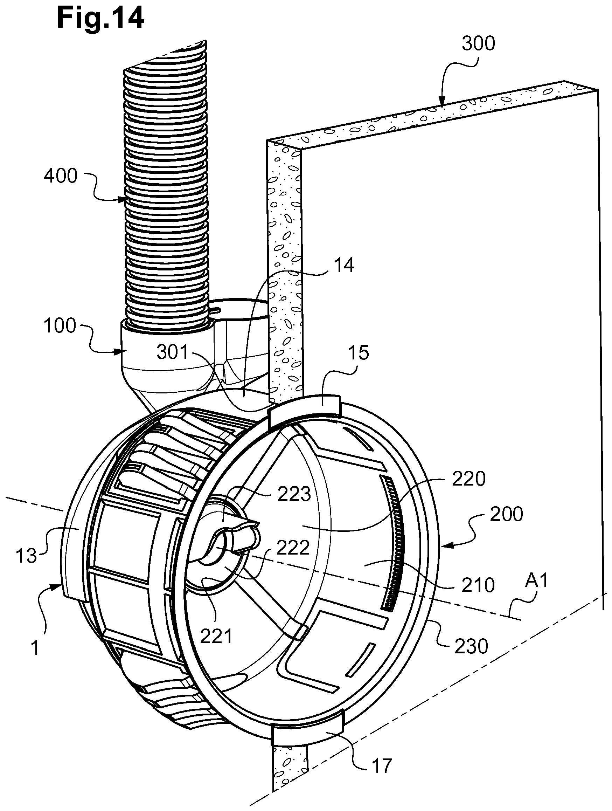

Comme le montre la figure 14, l'appareillage électrique est prévu pour être logé dans une boîte électrique 200 encastrée au travers de cette ouverture circulaire 301.

La boîte électrique 200 permet alors non seulement de fixer rigidement l'appareillage électrique dans la paroi mais également de le protéger.

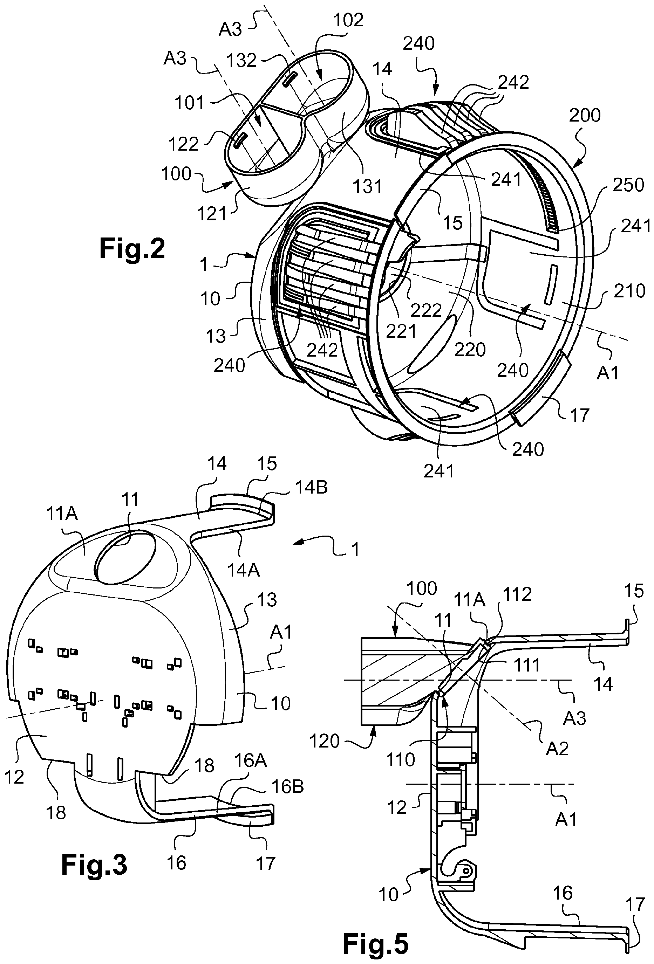

Telle que représentée sur les figures 1 et 2, cette boîte électrique 200 présente ici une forme générale cylindrique, mais elle pourrait bien entendu présenter une forme différente, notamment parallélépipédique.

Elle comporte une paroi latérale 210 tubulaire de révolution autour d'un axe principal A1, qui est fermée à l'arrière par un fond 220 et qui est ouverte vers l'avant. La boîte électrique 200 délimite ainsi un logement intérieur d'accueil de l'appareillage électrique.

Pour sa fixation dans l'ouverture circulaire 301 pratiquée dans le panneau de plâtre 300, la boîte électrique 200 comporte un trottoir extérieur 230 qui longe extérieurement le bord de l'ouverture avant de la paroi latérale 210 et qui est adapté à prendre appui contre la face avant du panneau de plâtre 300, autour de l'ouverture circulaire 301. Ainsi ce trottoir extérieur 230 permet-il de bloquer la boîte électrique 200 vers l'arrière.

Pour son blocage vers l'avant, la boîte électrique 200 comporte des moyens de fixation 240 qui sont adaptés à s'accrocher à l'arrière du panneau de plâtre 300.

Ces moyens de fixation pourraient se présenter sous la forme de griffes qui interviendraient en position diamétralement opposée sur la face externe de la paroi latérale, et qui, sous le contrôle de vis, pourraient venir s'accrocher à la face arrière du panneau de plâtre.

Ici, ces moyens de fixation 240 sont formés d'une seule pièce avec le reste de la boîte électrique 200.

Ils comportent des volets 241 rectangulaires découpés dans la paroi latérale 210 de la boîte électrique 200 de telle manière qu'ils se rattachent à celle-ci uniquement par leurs bords avant, ce dernier formant alors une sorte de charnière. Chaque volet 241 porte sur sa face extérieure des nervures parallèles souples 242.

Chaque volet 241 est ainsi libre de s'escamoter vers l'intérieur de la boîte électrique 200 lors de l'engagement de la boîte électrique 200 au travers de l'ouverture circulaire 301 prévue dans le panneau de plâtre 300, puis pour revenir vers sa position initiale de manière que ses nervures parallèles souples 242 puissent s'accrocher à la face arrière du panneau de plâtre 300. Les volets 241 sont ensuite bloqués dans cette position par l'appareillage électrique lui-même, qui est conformé de telle sorte qu'il les repousse vers l'extérieur.

La boîte électrique 200 comporte également des moyens d'assujettissement 250 de l'appareillage électrique.

Ces moyens d'assujettissement pourraient se présenter sous la forme de puits de vissage qui s'élèveraient à partir du fond de la boîte électrique, vers l'avant, le long de la face intérieure de la paroi latérale, et qui accueilleraient des vis de fixation de l'appareillage électrique.

Ici, ces moyens d'assujettissement comportent plutôt deux cavités 250 diamétralement opposées, en creux dans la face intérieure de la paroi latérale 210 de la boîte électrique 200, dans lesquelles peuvent s'accrocher des moyens d'encliquetage prévus sur l'appareillage électrique.

Comme le montre la figure 1, pour faciliter la connexion de l'appareillage électrique aux fils électrique gainés du réseau électrique local, il est prévu un connecteur 1.

La présente invention porte plus particulièrement sur ce connecteur 1.

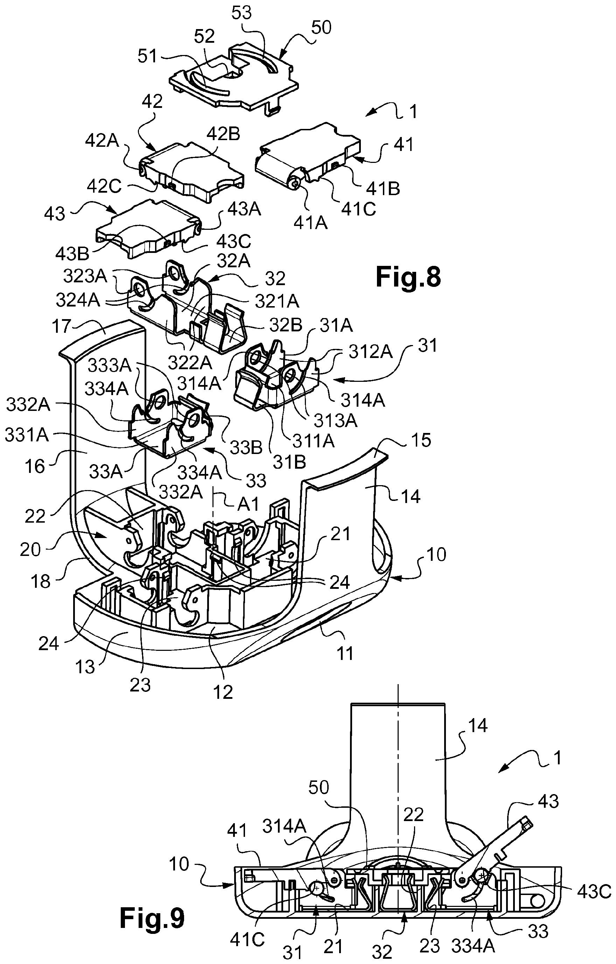

Tel que représenté sur les figures 1 et 8, dans un premier mode de réalisation, le connecteur 1 comporte un socle 10 et des éléments de connexion 31, 32, 33 fixés au socle 10.

Le socle 10 est prévu pour se placer à l'arrière du fond 220 de la boîte électrique 200. Il présente alors une forme telle qu'il peut recouvrir la majeure partie du fond 220, de manière à former avec celui-ci un double-fond.

Ce socle 10 comporte ici une paroi de fond 12 plane, globalement circulaire autour de l'axe principal A1, qui est bordée à l'avant par un rebord périphérique 13 adapté à venir en appui contre la boîte électrique 200 (voir figure 2).

Comme le montre bien la figure 3, le socle 10 délimite une ouverture d'entrée 11 prévue pour être traversée par les fils électriques gainés 401, 402, 403.

Comme le montre plus particulièrement la figure 8, il est ici prévu, sur la face avant de la paroi de fond 12, trois éléments de connexion 31, 32, 33 de phase, de neutre et de terre pour la connexion des trois fils électriques gainés 401, 402, 403.

En variante, il pourrait en être prévu un nombre restreint (par exemple deux, de phase et de neutre) ou un nombre accru (par exemple quatre, dans le cas d'un va-et-vient).

Chacun de ces éléments de connexion 31, 32, 33 comprend une borne d'entrée 31A, 32A, 33A pour la connexion de l'un des fils électriques gainés 401, 402, 403, et une borne de sortie 31B, 32B, 33B accessible par l'avant du socle 10 pour la connexion des broches de l'appareillage électrique.

Selon une caractéristique particulièrement avantageuse de l'invention, le connecteur 1 comporte au moins deux bras 14, 16 distincts qui s'étendent à partir du socle 10, majoritairement à l'avant de la tranche avant du rebord périphérique 13 du socle 10 et vers l'avant, et dont les extrémités libres présentent des moyens d'accrochage 15, 17 à la paroi.

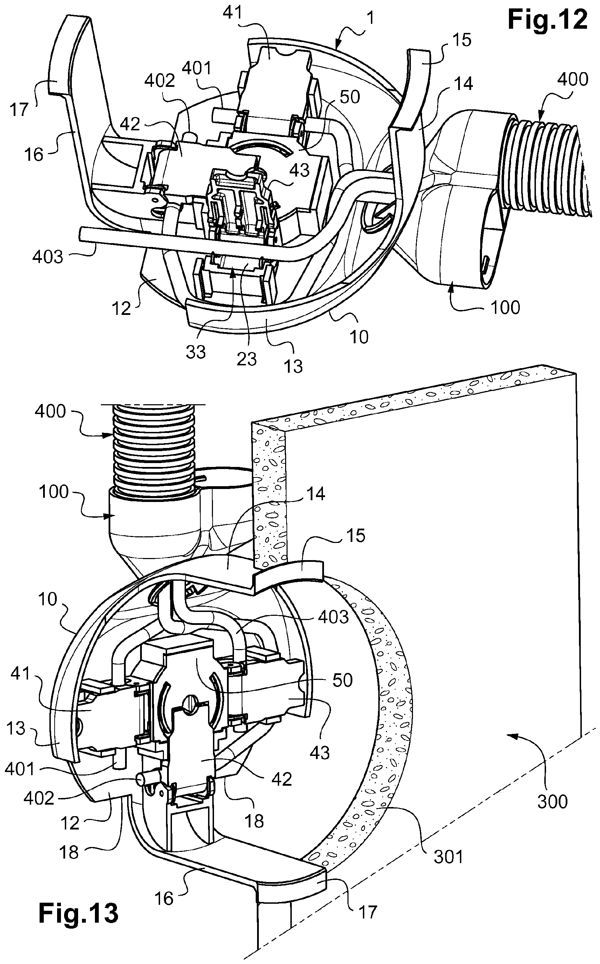

Comme le montre la figure 13, ces deux bras 14, 16 permettent ainsi de positionner le connecteur 1 sur le panneau de plâtre 300, avant de rapporter la boîte électrique 200.

Les deux bras 14, 16 s'étendent sur des longueurs telles qu'une fois accrochés au panneau de plâtre 300, ils maintiennent le socle 10 à l'arrière et à distance de ce panneau de plâtre 300.

Ainsi, ces deux bras 14, 16 s'étendent complètement à l'extérieur et à l'avant du socle 10, de telle sorte qu'une fois le connecteur 1 rapporté dans la cloison creuse, le socle 10 s'étend entièrement à l'arrière du panneau de plâtre, quelle que soit l'épaisseur de ce panneau comprise entre 6 et 26 millimètres.

Grâce à l'espace ainsi laissé libre entre le socle 10 et le panneau de plâtre 300, il est possible de facilement refouler la gaine de cheminement 400 dans la cloison creuse, en la guidant manuellement de manière qu'elle se place dans la direction souhaitée.

Dans le mode de réalisation représenté sur les figures 1 à 14, le connecteur 1 comporte uniquement deux bras 14, 16 qui sont situés à l'opposé l'un de l'autre par rapport à l'axe principal A1.

Comme le montre la figure 3, ces deux bras 14, 16 s'étendent à partir de la tranche avant du rebord périphérique 13 du socle 10, dans le prolongement de ce rebord périphérique 13, et dans des directions parallèles.

Ces deux bras 14, 16 sont droits. Plus précisément, ils présentent ici des formes globalement rectangulaires, avec deux bords latéraux 14A, 16A rectilignes, et un bord d'extrémité avant 14B, 16B en arc-de-cercle. Les bords d'extrémité avant 14B, 16B des deux bras 14, 16 sont circonscrits à un même cercle qui est centré sur l'axe principal A1 et qui présente un diamètre égal à celui de l'ouverture circulaire 301 du panneau de plâtre 300.

Les extrémités libres de ces deux bras 14, 16 sont recourbées vers l'extérieur, de manière à former des rebords 15, 17 qui s'étendent radialement à partir des bords d'extrémité avant 14B, 16B des deux bras 14, 16, dans des directions opposées. Ces rebords 15, 17 sont ainsi adaptés à s'appuyer contre la face avant du panneau de plâtre 300, si bien qu'ils forment lesdits « moyens d'accrochage » des bras 14, 16 à la paroi.

Les bras 14, 16 viennent ici de formation d'une seule pièce avec le socle 10, par moulage d'une matière plastique.

En variante, on pourrait prévoir que les bras soient rapportés, par exemple par encliquetage, sur le socle.

Ici, l'ouverture d'entrée 11, qui permet le passage des fils électriques gainés 401, 402, 403 depuis l'extérieur et l'arrière du socle 10 vers l'intérieur et l'avant de ce socle 10, présente une forme circulaire, de diamètre suffisant pour permettre le passage simultané de ces trois fils électriques gainés 401, 402, 403.

Cette ouverture d'entrée 11 est préférentiellement située dans le prolongement d'un premier des deux bras 14. Elle est plus précisément située dans un méplat 11A qui s'étend à cheval sur la paroi de fond 12 et sur le rebord périphérique 13, et qui est incliné par rapport à l'axe principal A1.

Comme le montre la figure 5, ce méplat 11A est ici incliné à 45 degrés par rapport à l'axe principal A1, si bien que l'angle formé entre l'axe principal A1 et l'axe A2 de l'ouverture d'entrée 11 est de 45 degrés.

Comme le montre plus particulièrement la figure 3, le rebord périphérique 13 présente avantageusement deux encoches 18 qui sont situées de part et d'autre du second des deux bras 16 (celui situé à l'opposé de l'ouverture d'entrée 11) et qui sont contigües à ce second bras 16. Ces encoches 18 s'étendent chacune sur un secteur angulaire qui est supérieur à 20 degrés autour de l'axe principal A1, et qui est ici environ égal à 50 degrés.

Ces encoches 18 sont prévues pour faciliter l'engagement du connecteur 1 au travers de l'ouverture circulaire 301 pratiquée dans le panneau de plâtre 300. Ainsi, comme le montrent les figures 10 et 13, après avoir engagé le socle 10 dans l'ouverture circulaire 301 par son côté qui porte le premier bras 14 (à savoir le côté d'où débouchent les fils électriques gainés 401, 402, 403), les encoches 18 permettent au socle 10 de basculer de telle manière que son second bras 16 puisse également s'engager dans l'ouverture circulaire 301, en évitant que le rebord périphérique 13 ne vienne buter contre le panneau de plâtre 300.

Comme le montrent les figures 13 et 14, une fois le connecteur 1 en place, le risque est que ces bras 14, 16 forment obstacle à l'engagement de la boîte électrique 200 dans l'ouverture circulaire 301.

Pour éviter toute interférence entre la boîte électrique 200 et le connecteur 1, comme le montre la figure 1, la paroi latérale 210 de la boîte électrique 200 présente, en creux dans sa face extérieure, deux rainures 214, 216 dont les dimensions sont ajustées à celles des bras 14, 16, pour permettre le passage de ces dernier.

On observe également sur la figure 1 que le trottoir extérieur 230 de la boîte électrique 200 est interrompu dans le prolongement de ces deux rainures 214, 216, pour permettre le passage des rebords 15, 17 du connecteur 1.

En variante, on aurait pu prévoir que la boîte électrique soit dépourvue de telle rainure, auquel cas le réglage de l'orientation de la boîte électrique par rapport au connecteur autour de l'axe principal A1 serait libre.

Selon une autre variante, on pourrait prévoir sur la face intérieure des bras du connecteur et sur la face extérieure de la boîte électrique des moyens pour guider le coulissement de la boîte électrique entre les bras du connecteur et pour bloquer toute mobilité de rotation de la boîte électrique par rapport au connecteur. Ces moyens pourraient par exemple comporte une nervure ayant un profil particulier, par exemple une forme de queue d'aronde.

Ici, avantageusement, le connecteur 1 comporte un embout 100 conçu pour assurer le maintien de la gaine de cheminement 400 relativement au socle 10 et pour assurer une étanchéité entre ces deux éléments.

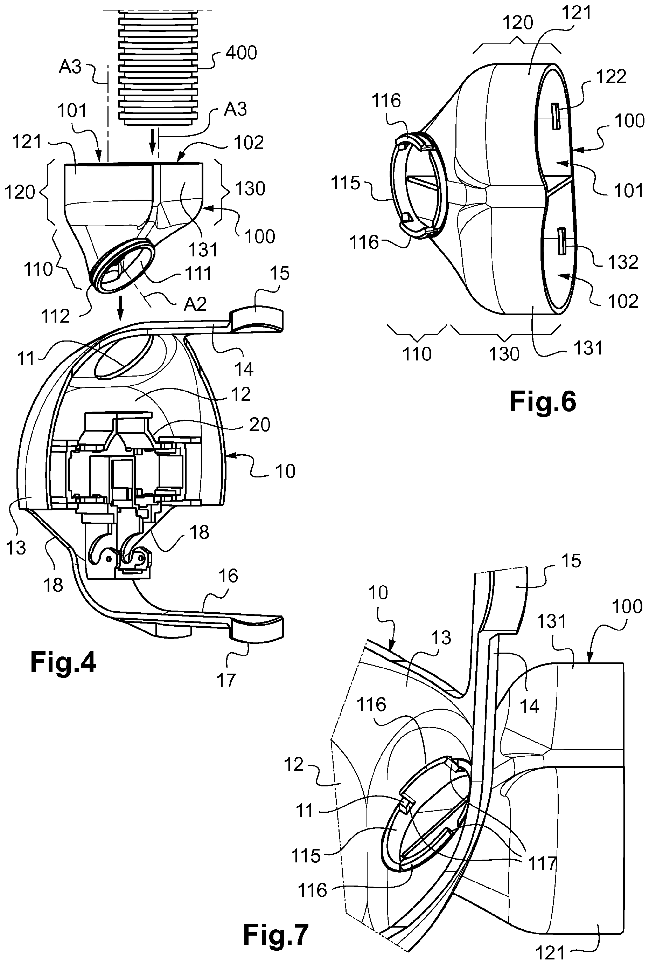

Comme le montre la figure 4, cet embout 100 délimite au moins un passage 101, 102 pour les fils électriques gainés 401, 402, 403. Il comporte une partie de montage 110 pour son montage sur le socle 10, dans l'axe de ladite ouverture d'entrée 11, et au moins une partie d'assujettissement 120, 130 pour l'assujettissement de la gaine de cheminement 400.

En pratique, cet embout 100 délimitera au moins deux passages 101, 102 distincts pour des fils électriques gainés 401, 402, 403 issus de deux gaines de cheminement 400. Il comportera alors au moins deux parties d'assujettissement 120, 130 pour l'assujettissement de ces deux gaines de cheminement 400.

L'une de ces gaines de cheminement 400 est celle décrite supra, c'est-à-dire celle dans laquelle circulent les fils électriques gainés 401, 402, 403 issus du réseau électrique local. L'autre de ces gaines de cheminement est utilisée si l'on souhaite connecter un autre appareillage électrique en dérivation de l'appareillage électrique considéré (on parle de repiquage). Cette autre gaine est alors conçue pour protéger les fils électriques gainés permettant ce repiquage.

Les parties d'assujettissement 120, 130 comportent chacune un conduit tubulaire 121, 131 d'axe A3 et de diamètre intérieur égal, au jeu de montage près, au diamètre extérieur des gaines de cheminement 400.

Ces deux conduits tubulaires 121, 131 sont préférentiellement juxtaposés, de manière qu'ils s'étendent côte-à-côte, en parallèle l'un de l'autre, et qu'ils débouchent dans une même direction.

Comme le montre la figure 2, chaque conduit tubulaire 121, 131 est équipé intérieurement d'un moyen de retenue 122, 132 d'une gaine de cheminement 400.

Ici, ces moyens de retenue sont simplement formés par des nervures 122, 132 qui s'étendent en saillie de la face intérieure des conduits tubulaires 121, 131. Ces nervures 122, 132 s'étendent en longueur dans des plans perpendiculaires aux axes A3 et présentent des profils tels qu'elles peuvent s'engager dans les gorges des gaines de cheminement 400 pour assurer le blocage des extrémités de ces gaines de cheminement 400 à l'intérieur des conduits tubulaires 121, 131.

Comme le montrent les figures 4 et 5, la partie de montage 110 de l'embout 100 sur le socle 10 comporte un conduit tubulaire 111 de révolution autour d'un axe A2, qui présente extérieurement une gorge périphérique 112 engagée sur le bord de l'ouverture d'entrée 11 du socle 10.

Ici, l'embout 100 est réalisé d'une seule pièce par moulage d'un matériau plus souple que celui du socle 10, ce qui facilite l'assemblage de la partie de montage 110 sur le bord de l'ouverture d'entrée 11 du socle 10. En variante, on pourrait prévoir que l'embout soit réalisé dans le même matériau que le socle, auquel cas l'assemblage devra se faire en force.

Puisque la partie de montage 110 de l'embout 100 et l'ouverture d'entrée 11 du socle 10 présentent des formes de révolution autour de l'axe A2, on comprend que l'embout 100 est libre de pivoter par rapport au socle 10, autour de l'axe A2.

Cette caractéristique est avantageuse dans la mesure où les axes A3 des conduits tubulaires 121, 131 des parties d'assujettissement 120, 130 sont inclinés par rapport à l'axe A2 du conduit tubulaire 111 de la partie de montage 110. En effet, ces trois conduits tubulaires 111, 121, 131 se raccordent ici ensemble par une partie intermédiaire évasée et légèrement coudée de telle manière que les axes A3 s'étendent dans un plan incliné à 45 degrés par rapport à l'axe A2.

De cette manière, comme le montrent les figures 4 et 5, en faisant pivoter l'embout 100 par rapport au socle 10, il est possible d'orienter les axes A3 soit latéralement (figure 4) dans un plan parallèle au panneau de plâtre 300, soit vers l'arrière (figure 5). Il est ainsi possible d'orienter les gaines de cheminement 400 dans la direction souhaitée, pour faciliter leur refoulement dans la cloison creuse.

Sur les figures 6 et 7, on a représenté une variante de réalisation de l'embout 100. Dans cette variante, les parties d'assujettissement 120, 130 restent identiques à celles représentées sur les figures 4 et 5. Seule la partie de montage 110 change.

Ici, la partie de montage 110 comporte un conduit tubulaire 115 de révolution autour de l'axe A2 et deux pattes d'encliquetage 116 situées de manière diamétralement opposée par rapport à l'axe A2. Ces deux pattes d'encliquetage 116 s'élèvent en parallèle à partir du bord du conduit tubulaire 15. Elles présentent sur leurs faces extérieures des dents adaptées à s'accrocher au bord de l'ouverture d'entrée 11 du socle 10.

Dans cette variante, l'embout 100 est réalisé d'une seule pièce par moulage d'un matériau identique à celui du socle 10. Bien entendu, en variante, on pourrait prévoir que l'embout soit réalisé dans un matériau différent de celui du socle.

Dans cette variante, comme le montre la figure 7, le conduit tubulaire 115 présente quatre encoches 117 situées par paires de part et d'autre de chaque patte d'encliquetage 116. Ces encoches 117 permettent aux pattes d'encliquetage 116 de fléchir plus facilement lors de l'assemblage de l'embout 100 sur le socle 10.

Comme cela a été exposé précédemment, l'embout 100 pourra être orienté de la façon souhaitée par rapport au socle 10, de manière que ses conduits tubulaires 121, 131 soient dirigés soient vers l'arrière, soit parallèlement au panneau de plâtre 300.

On pourra alors prévoir que le socle 10 comporte des moyens d'indexation pour bloquer l'embout 100 dans l'une ou l'autre de ces deux positions. Ainsi, on pourra prévoir que le bord de l'ouverture d'entrée 11 du socle 10 présente deux ergots (non représentés) adaptés à s'engager dans les encoches 117 de l'embout 100 lorsque ce dernier se trouve dans l'une ou l'autre de ces deux positions.

Selon une autre variante de réalisation de l'embout non représentée sur les figures, on aurait pu prévoir que la partie de montage de l'embout présente une face extérieure en forme de tronçon de sphère, et que le bord de l'ouverture d'entrée du socle présente une forme correspondante, de manière que la liaison entre l'embout et le socle forme une liaison rotule.

Quelle que soit sa forme, l'embout 100 permet d'amener les fils électriques gainés 401, 402, 403 dans le socle 10, vers les trois éléments de connexion 31, 32, 33.

Comme le montre la figure 8, ces trois éléments de connexion 31, 32, 33 sont fixés dans des logements d'accueil 21, 22, 23 qui sont isolés les uns des autres et qui sont délimités par des cloisons 20 s'élevant à partir de la face avant de la paroi de fond 12 du socle 10.

En pratique, chaque logement d'accueil 21, 22, 23 est délimité par quatre cloisons disposées en rectangle. Deux cloisons opposées de chaque logement présentent ici des dents 24 en vis-à-vis afin de bloquer les éléments de connexion 31, 32, 33 dans le socle 10.

Ces trois logements d'accueil 21, 22, 23 sont positionnés les uns par rapport aux autres en T, avec un premier logement 22 qui s'étend à partir du rebord périphérique 13 du socle 10, au niveau du second bras 16, jusqu'au centre du socle 10. Les deux autres logements 21, 23 s'étendent de part et d'autre de celui-ci, à angle droit.

Le premier logement 22 est prévu pour accueillir l'élément de connexion 32 de terre, tandis que les deux autres logements 21, 23 sont prévus pour accueillir les éléments de connexion 31, 33 de phase et de neutre.

Ces éléments de connexion 31, 32, 33 sont tous issus de découpe et de pliage d'un feuillard métallique.

Leurs bornes d'entrée 31A, 32A, 33A présentent des formes identiques.

Il pourrait s'agir de bornes automatiques. Ainsi ces bornes d'entrée pourraient-elles par exemple chacune comporter une lame-ressort délimitant un conduit d'insertion et de blocage automatique d'une extrémité dénudée d'un fil électrique gainé.

Il pourrait également s'agir de bornes à vis, comportant des vis adaptées à bloquer et à connecter les fils électriques gainés.

Ici, pour faciliter le travail de l'installateur, il s'agit plutôt de bornes à connexion rapide, équipées chacune d'un levier de manœuvre 41, 42, 43.

Chaque borne d'entrée 31A, 32A, 33A comporte ainsi une paroi arrière 311A, 321A, 331A rectangulaire et plane, destinée à s'appuyer contre la paroi de fond 12 du socle 10, flanquée de deux parois latérales 312A, 322A, 332A repliées à angle droit vers l'avant par rapport à la paroi arrière 311A, 321A, 331A.

Chaque levier de manœuvre 41, 42, 43 présente ici une forme de plaquette rectangulaire montée mobile en rotation par rapport au socle 10, entre une position ouverte dans laquelle il découvre la borne d'entrée pour permettre d'y rapporter l'un des fils électriques gainés 401, 402, 403, et une position fermée dans laquelle il ferme le logement d'accueil 21, 22, 23 de cette borne.

Ici, chaque levier de manœuvre 41, 42, 43 est monté mobile en rotation sur la borne d'entrée 31A, 32A, 33A correspondante.

Les parois latérales 312A, 322A, 332A de chaque borne d'entrée 31A, 32A, 33A sont à cet effet respectivement percées de deux œillets 313A, 323A, 333A coaxiaux dans lesquels sont engagés des tourillons 41A, 42A, 43A prévus de part et d'autre de chaque levier de manœuvre 41, 42, 43.

Pour leur maintien en position fermée, les leviers de manœuvre 41, 42, 43 comportent sur leurs bords des dents 41B, 42B, 43B adaptées à s'encliqueter dans des cavités prévues dans les cloisons 20.

Pour trancher la gaine du ou des fils électriques gainés 401, 402, 403 qui y sont rapportés, les parois latérales 312A, 322A, 332A de chaque borne d'entrée 31A, 32A, 33A présentent deux fentes 314A, 324A, 334A qui s'étendent en parallèle.

Chaque fente 314A, 324A, 334A s'étend depuis le bord avant de la paroi latérale 312A, 322A, 332A correspondante, jusqu'à proximité de la paroi arrière 311A, 321A, 331A, selon un arc-de-cercle centré sur l'œillet 313A, 323A, 333A correspondant.

Les bords de ces fentes 314A, 324A, 334A sont aiguisés pour trancher les gaines isolantes des fils électriques gainés 401, 402, 403 afin d'établir une connexion électrique.

Comme le montrent les figures 8 et 9, chaque levier de manœuvre 41, 42, 43 présente sur sa face arrière une gorge 41C, 42C, 43C qui permet d'accrocher le fil électrique gainé correspondant de manière à le forcer à s'engager dans les fentes 314A, 324A, 334A de la borne d'entrée correspondante.

Les bornes de sortie 31B, 32B, 33B des éléments de connexion 31, 32, 33 sont quant à elles conformées pour accueillir les broches plates de l'appareillage électrique. Elles forment ici des alvéoles de réception de ces broches.

En variante, si l'appareillage électrique était pourvu à l'arrière d'alvéoles de réception de broches, on aurait prévu que les bornes de sortie des éléments de connexion comportent des broches s'élevant vers l'avant.

Les éléments de connexion 31, 32, 33 sont disposés dans leurs logements d'accueil 21, 22, 23 de telle manière que leurs bornes de sortie 31B, 32B, 33B sont contigües (c'est-à-dire situées à proximité les unes des autres, ici à proximité du centre du socle 10) et que leurs bornes d'entrée 31A, 32A, 33A sont situées à distance les unes des autres.

Comme le montre la figure 11, ils sont par ailleurs logés dans leurs logements d'accueil 21, 22, 23 de telle manière que les axes de pivotement A41, A42, A43 des leviers de manœuvre 41, 42, 43 sont tous parallèles à la paroi de fond 12 du socle 10.

L'axe de pivotement A42 du levier de manœuvre 42 de l'élément de connexion 32 de terre est plus précisément orienté orthogonalement par rapport à l'axe A2 de l'ouverture d'entrée 11 du socle, et les axes de pivotement A41, A43 des deux autres leviers de manœuvre 41, 43 sont orientés perpendiculairement à ce premier axe de pivotement A42.

Autrement formulé, les projetés orthogonaux, sur le plan de la face avant de la paroi de fond 12 du socle 10, de ces deux axes de pivotement A41, A43 et de l'axe A2 de l'ouverture d'entrée 11 sont parallèles.

De cette manière, comme le montrent les figures 12 et 13, pour engager les fils électriques gainés 403, 401 dans les bornes d'entrée 31A, 33A des éléments de connexion 31, 33 de phase et de neutre, il n'est pas nécessaire de les plier exagérément. Bien entendu, en variante, les leviers de manœuvre pourraient être disposés autrement dans le socle.

Comme le montrent les figures 8 et 11, le connecteur 1 comporte par ailleurs un capot 50 à encliqueter par-dessus les cloisons 20 du socle 10, au centre de ce dernier, pour cacher les bornes de sortie 31B, 32B, 33B des éléments de connexion 31, 32, 33.

Ce capot 50 présente une forme de plaque carrée. Il comporte une ouverture centrale 52 d'accès à la borne de sortie 32B de l'élément de connexion 32 de terre, et deux ouvertures en arc-de-cercle 51, 53 qui sont centrées sur l'ouverture centrale 52 et qui donnent accès aux bornes de sortie 31B, 33B des deux autres éléments de connexion 31, 33.

Comme le montre la figure 14, le fond 220 de la boîte électrique 200 présente également au moins une ouverture d'accès 221 pour permettre la connexion de l'appareillage électrique au connecteur 1.

Il présente ici une unique ouverture d'accès 221 circulaire, centrée sur l'axe principal A1. Cette ouverture d'accès 221 présente un diamètre supérieur à celui des ouvertures en arc de cercle 51, 53 du capot 50, de manière qu'elle permet d'accéder simultanément aux trois bornes de sortie 31B, 32B, 33B des éléments de connexion 31, 32, 33 du connecteur 1.

Cette ouverture d'accès 221 est initialement fermée par un opercule 222 détachable ou défonçable. Il s'agit ici d'un opercule détachable 222, qui est surmoulé sur le corps de la boîte électrique 200 et qui présente en face avant une languette 223 facilitant son arrachement.

Grâce à cet opercule détachable 222, lorsque la boîte électrique 200 est mise en place dans le panneau de plâtre 300, il est possible de peindre ce dernier en évitant que la peinture ne vienne recouvrir les bornes de sortie 31B, 32B, 33B des éléments de connexion 31, 32, 33 du connecteur 1.

En référence aux figures 10 à 14, on peut exposer en détail la mise en place et la connexion de l'appareillage électrique dans la cloison creuse.

Initialement, une ouverture circulaire 301 est pratiquée à la scie cloche dans le panneau de plâtre 300 de la cloison creuse, de telle manière que l'extrémité libre d'une gaine de cheminement 400 puisse être tirée à l'extérieur de la cloison creuse, au travers de cette ouverture circulaire 301.

Comme le montre la figure 10, les extrémités des fils électriques gainés 401, 402, 403 sortant de cette gaine de cheminement 400 sont alors engagées au travers de l'embout 100 et de l'ouverture d'entrée 11 du socle 10, puis l'extrémité de la gaine de cheminement 400 est bloquée dans l'un des conduits tubulaires 121 de l'embout 100.

Après avoir soulevé le levier de manœuvre 41 monté sur l'élément de connexion 31 de phase, l'installateur plie le fil électrique isolé 401 de phase de manière à pouvoir placer l'extrémité de ce fil au-dessus des embouchures des fentes de la borne d'entrée de cet élément de connexion 31. Il rabat ensuite le levier de manœuvre 41 en position fermée, ce qui a pour effet de forcer le fil électrique isolé 401 de neutre à s'engager dans les fentes de cette borne d'entrée. La gaine isolante de ce fil est ainsi automatiquement tranchée, ce qui permet d'établir un contact électrique entre le fil et la borne de sortie de cet élément de connexion 31.

Comme le montrent les figures 11 et 12, l'installateur plie ensuite le fil électrique isolé 402 de terre de manière à ce qu'il contourne le logement d'accueil 23 de l'élément de connexion 33 de phase, et passe entre celui-ci et le rebord périphérique 13 du socle 10. Pour faciliter la mise en place de ce fil, l'installateur place le levier de manœuvre 43 de l'élément de connexion 33 de phase en position ouverte.

L'installateur procède alors de la même manière que précitée pour connecter le fil électrique isolé 402 de terre à la borne d'entrée de l'élément de connexion 32 de terre.

L'installateur procède également de la même manière que précitée pour connecter le fil électrique isolé 403 de phase à la borne d'entrée de l'élément de connexion 33 de phase (voir figure 12).

Lorsque l'installateur referme le levier de manœuvre 43 de cet élément de connexion 33 de phase, ce levier de manœuvre 43 vient naturellement se placer au dessus du fil électrique gainé 402 de terre, ce qui permet de maintenir ce dernier en position. Le levier de manœuvre 43 est à cet effet prévu pour déborder du logement d'accueil 23 de l'élément de connexion 33 de phase.

On notera que pour connecter les fils électriques gainés 401, 402, 403, l'installateur n'aura pas eu à les couper à la longueur souhaitée puisque si ces fils sont particulièrement longs, leurs extrémités peuvent être tirées au travers des encoches 18 du socle 10. Ces fils seront coupés à la bonne longueur après leur connexion, ce qui facilitera le travail de l'installateur.

On notera également que si l'installateur désire repiquer un autre appareillage électrique en parallèle de celui considéré, il pourra engager une seconde gaine de cheminement dans l'embout 100, puis il pourra connecter les trois fils issus de cette seconde gaine de cheminement dans les fentes des bornes d'entrée 31A, 32A, 33A des éléments de connexion 31, 32, 33, au dessus des fils électriques gainés 401, 402, 403 précités.

Comme le montre la figure 13, le connecteur 1 est ensuite mis en place au travers de l'ouverture circulaire 301 pratiquée dans le panneau de plâtre 300, tout d'abord en l'y engageant par son côté duquel émerge la ou les gaines de cheminement 400, puis en le faisant basculer sans difficulté grâce aux encoches 18 pratiquées dans le socle 10.

Le connecteur 1 est placé d'autant plus facilement dans la cloison creuse que, grâce à la faible épaisseur du socle 10, l'installateur garde un accès à la ou aux gaines de cheminement 400 pendant l'installation du connecteur 1 dans la paroi, de manière qu'il peut les refouler dans la direction souhaitée avec plus de facilité.

L'installateur peut également orienter l'embout 100 par rapport au socle 10 de la manière souhaitée, avant d'installer le connecteur 1 dans la paroi, ce qui facilite également le refoulement de la ou des gaines de cheminement 400.

Le connecteur 1 est considéré en place lorsque les rebords 15, 17 des bras 14, 16 sont en appui contre la face avant du panneau de plâtre 300.

Comme le montre la figure 14, reste alors pour l'installateur à engager la boîte électrique 200 au travers de l'ouverture circulaire 301 pratiquée dans le panneau de plâtre 300, ce qui est fait sans difficulté grâce aux rainures 214, 216 prévues sur la face externe de la paroi latérale 210 de la boîte électrique 200.

La boîte électrique est considérée en place lorsque son fond est en appui contre le socle 10 et que l'ouverture d'accès prévue dans son fond se place en regard des bornes de sortie des éléments de connexion du connecteur 1.

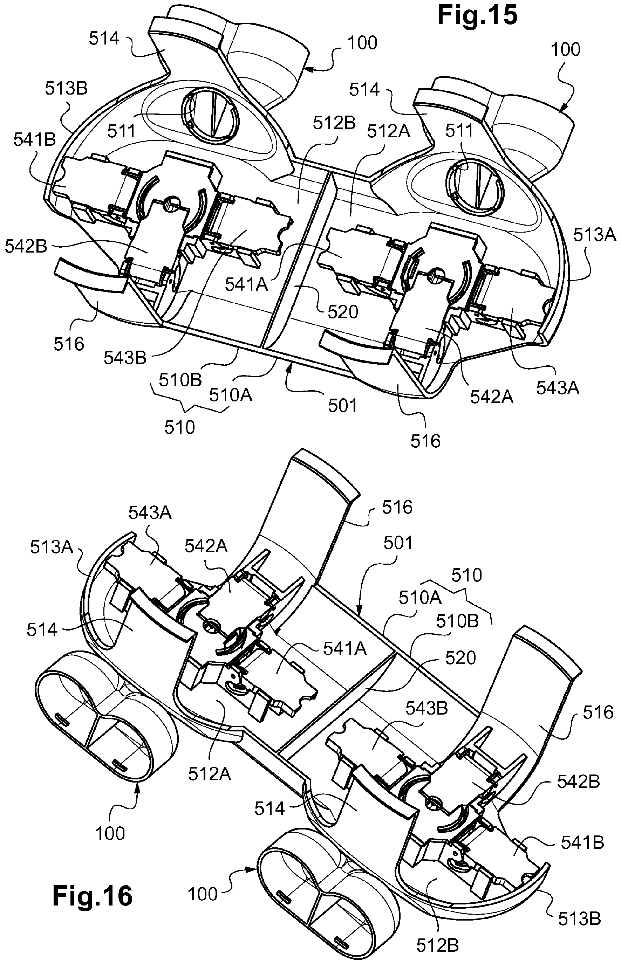

En particulier, comme le montrent les figures 15 et 16, on pourra prévoir d'utiliser un connecteur 501 de forme différente dans le cas où la boîte électrique à engager dans la paroi est une boîte multiposte, c'est-à-dire une boîte adaptée à accueillir deux appareillages électriques ou davantage.

Sur ces figures 15 et 16, on a représenté un connecteur 501 prévu pour être utilisé en combinaison avec une boîte électrique à deux postes (non représentée).

Ce connecteur 501 présente alors un socle 510 qui délimite deux postes distincts 510A, 510B. Chaque poste présente une architecture quasiment identique à celle du connecteur 1 représenté sur les figures 1 à 14. Seule change légèrement la forme des parois de fond 512A, 512B et des rebords périphériques 513A, 513B de ces deux postes 510A, 510B, puisque ces parois et rebords se rejoignent au niveau d'une cloison 520 rectiligne.

Chaque poste 510A, 510B présente ainsi notamment une ouverture d'entrée 511A, 511B, trois éléments de connexion (non visibles), et trois leviers de manœuvre 541A, 542A, 543A, 541B, 542B, 543B.

Dans ce connecteur 501, il est prévu au moins trois bras 514, 516 distincts pour assurer une meilleure fixation du connecteur 501 à la paroi.

En l'espèce, il est ici prévu quatre bras répartis par paires au niveau de chaque poste 510A, 510B.

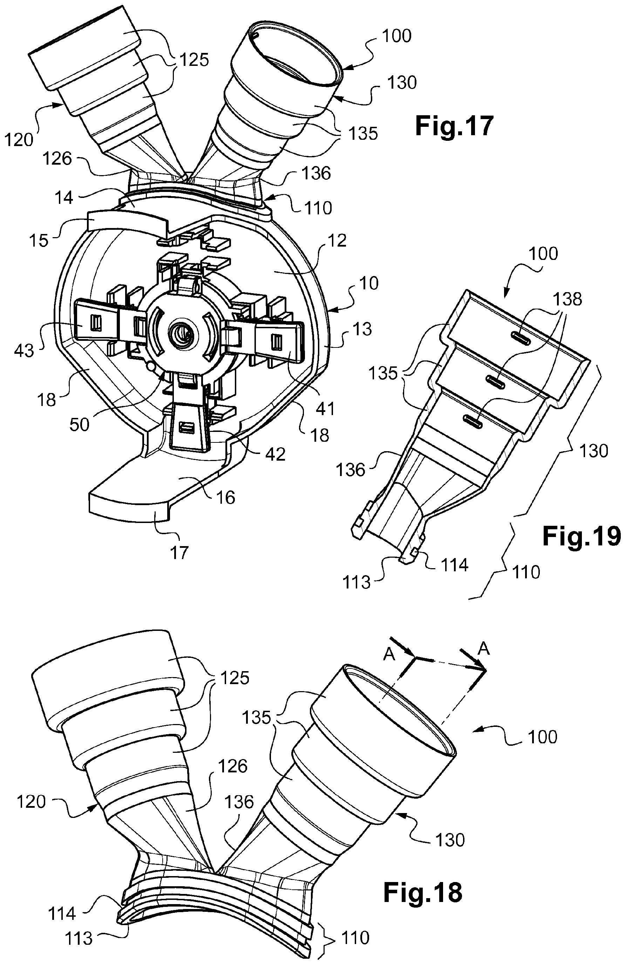

Sur la figure 17, on a représenté une autre variante de réalisation du connecteur 1.

Dans cette variante, le socle 10 et les éléments de connexion logés dans ce socle 10 comportent des formes homologues de celles du socle 10 et des éléments de connexion du connecteur 1 représenté sur la figure 1. Les leviers de manœuvre 41, 42, 43 présentent des formes légèrement différentes, plus effilées, ce qui n'affecte nullement leur fonctionnement.

On remarquera tout d'abord dans cette variante que le rebord périphérique 13 du socle 10 n'est pas interrompu le long des encoches 18, mais qu'il borde également la paroi de fond le long de ces encoches 18.

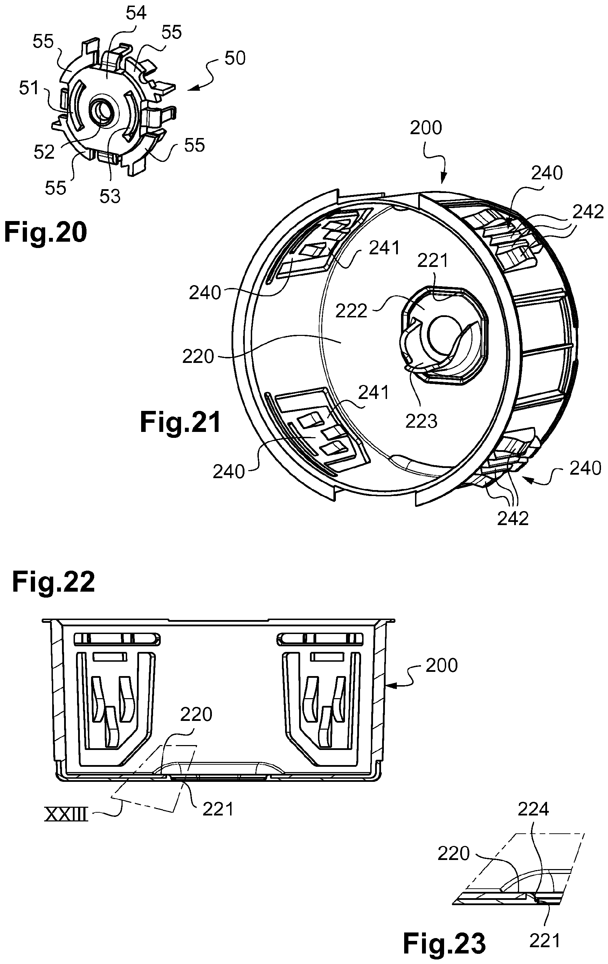

On remarquera également que le capot 50 présente une forme légèrement différente de celui représenté sur la figure 8. Cette variante de réalisation du capot 50 sera décrite en détail dans la suite de cet exposé, en référence aux figures 20 à 23.

Comme le montre bien la figure 17, l'embout 100 présente une forme sensiblement différente de celle de l'embout représenté sur la figure 1. Il est par ailleurs moulé d'une seule pièce en matière plus souple que le corps de la boîte électrique, à savoir ici en SEBS.

Comme le montrent les figures 18 et 19, dans cette variante, l'embout 100 comporte encore une partie de montage 110 pour son montage sur le socle 10, et deux parties d'assujettissement 120, 130 pour l'assujettissement de deux gaines de cheminement 400.

La partie de montage 110 comporte un conduit tubulaire 113 de section oblongue qui présente extérieurement une gorge périphérique 114 engagée sur le bord de l'ouverture d'entrée du socle 10. Dans cette variante, l'ouverture d'entrée présentera également une forme oblongue, si bien que le montage de la partie de montage 110 sur le socle 10 assurera une fixation rigide de ces deux éléments l'un par rapport à l'autre.

Les deux parties d'assujettissement 120, 130 sont ici identiques. Elles délimitent chacune un passage pour les fils électriques.

Elles présentent chacune, à leur jonction avec la partie de montage 110, une partie de liaison 126, 136 de forme globalement conique, évasée vers l'extérieur.

L'épaisseur des parois de ces parties de liaison 126, 136 est réduite, si bien que ces parties de liaison 126, 136 forment des sortes de charnières permettant aux parties d'assujettissement 120, 130 de pivoter par rapport à l'embase de montage 110.

Les deux parties d'assujettissement 120, 130 comportent ici une succession de tubes 125, 135 de diamètres différents, qui sont cylindriques de révolution.

Ainsi, ces parties d'assujettissement 120, 130 peuvent ici accueillir trois sortes de gaines de cheminement de diamètres différents.

Chaque tube 125, 135 est équipé de ses propres moyens de fixation 138 (voir figure 19) d'une gaine de cheminement. Ces moyens de fixation se présentent ici sous la forme de deux dents 138 diamétralement opposées, qui font saillie à l'intérieur de chaque tube 125, 135 et qui sont adaptées à s'engager dans l'une des gorges de la gaine de cheminement correspondante.

Sur la figure 20, on a représenté en détail le capot 50 du connecteur de la figure 17.

Sur les figures 21 à 23, on a représenté une variante de réalisation de la boîte électrique de la figure 1, qui est spécifiquement conçue pour coopérer avec le connecteur de la figure 17.

Comme le montre la figure 20, le capot 50 à encliqueter par-dessus les cloisons 20 du socle 10 du connecteur de la figure 17 (afin d'isoler les éléments de connexion) présente une paroi frontale 54 de forme carrée aux coins arrondis.

Cette paroi frontale 54 est bordée, au niveau de ses quatre coins arrondis, par des rebords 55 s'étendant parallèlement et à l'arrière de la paroi frontale 54.

Cette paroi frontale 54 est par ailleurs flanquée, au niveau de ses quatre bords droits, de quatre pattes d'encliquetage adaptées à s'accrocher au socle 10 du connecteur de la figure 17.

La paroi frontale 54 présente en outre ici encore trois ouvertures 51, 52, 53 d'accès aux bornes de sortie des éléments de connexion.

Comme le montre la figure 21, le fond 220 de la boîte électrique 200 présente quant à lui au moins une ouverture d'accès 221 pour permettre la connexion de l'appareillage électrique au connecteur 1.

Il présente ici une unique ouverture d'accès 221 dont le bord présente une forme identique, au jeu de montage près, à la forme de la paroi frontale du capot 50. De cette manière, lorsque la boîte électrique 200 est rapportée sur le connecteur 1, la paroi frontale 54 du capot 50 vient fermer cette ouverture d'accès 221.

De la même manière que pour la boîte électrique de la figure 1, l'ouverture d'accès 221 est initialement fermée par un opercule 222 détachable qui présente en face avant une languette 223 facilitant son arrachement.

Cet opercule 222 est surmoulé sur le corps de la boîte électrique 200, dans une matière plus souple que celle du corps de la boîte électrique, ici en SEBS.

En pratique, cet opercule 222 est surmoulé sur le corps de la boîte électrique 200 au même moment que les nervures parallèles souples 242 recouvrant les volets 241 de la boîte électrique 200 (voir figure 21).

Comme le montrent plus particulièrement les figures 22 et 23 (sur lesquelles une partie centrale de l'opercule 222 a été arrachée pour dégager l'ouverture d'accès 221), cet opercule 222 présente en partie périphérique, le long du bord de l'ouverture d'accès 221, un renflement 224 qui recouvre ce bord.

La partie périphérique de l'opercule 222 présente par ailleurs, le long du bord de ce renflement 224, une ligne de moindre épaisseur qui facilite l'arrachement de la partie centrale de l'opercule 222 selon cette ligne.

On observe alors sur les figures 22 et 23 que lorsque la partie centrale de l'opercule 222 a été arrachée, seul subsiste le renflement 224.

Ce renflement 224 va alors avoir une fonction de lèvre d'étanchéité, puisqu'il va se placer entre le bord de l'ouverture d'accès 221 de la boîte électrique 200 et le bord de la paroi frontale 54 du capot 50.

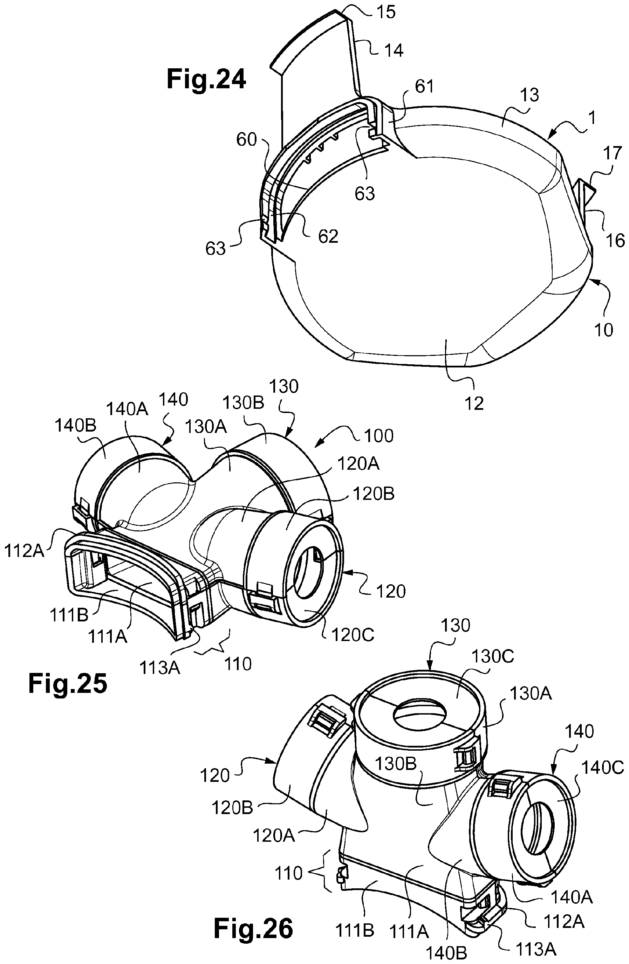

Sur la figure 24, on a représenté une variante de réalisation du connecteur 1.

Dans cette variante, le connecteur 1 présente une forme presque identique à celle du connecteur 1 de la figure 17. Il ne se distingue de celui-ci que par la forme de son ouverture d'entrée 60.

Cette ouverture d'entrée 60 présente ici une forme rectangulaire allongée le long d'une partie du pourtour du rebord périphérique 13 du socle 10. Elle présente un premier bord situé au niveau de la paroi de fond 12 du socle 10. Ses trois autres bords sont bordés, du côté extérieur du connecteur 1, par un rebord 61.

Une rainure 62 est prévue en creux dans la face intérieure de ce rebord 61.

Sur les figures 25 à 28, on a représenté un autre mode de réalisation de l'embout 100, adapté à être fixé au connecteur 1, dans l'axe de l'ouverture d'entrée 60.

Dans ce mode de réalisation, l'embout 100 présente trois parties d'assujettissement distinctes, qui se présentent sous la forme de trois conduits 120, 130, 140 pour accueillir les extrémités libres de trois gaines de cheminement différentes.

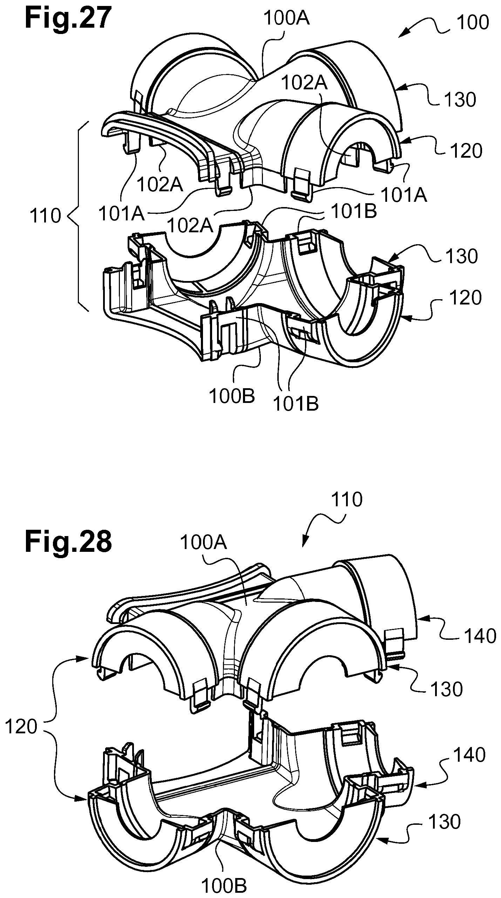

Comme le montrent les figures 27 et 28, cet embout 100 est formé de deux demi-coques 100A, 100B presque identiques, équipées de moyens d'encliquetage afin de permettre leur assemblage.

Comme le montrent les figures 25 et 26, cet embout 100 présente une partie flexible, ici réalisée en SEBS, sur laquelle sont surmoulées des parties rigides, ici réalisées en polypropylène.

Ainsi, la partie de montage 110 de l'embout 100 comporte, à son extrémité libre, un manchon rigide 111B de section rectangulaire, qui se prolonge vers les conduits 120, 130, 140 par un manchon flexible 111A.

De la même manière, chaque conduit 120, 130, 140 comporte un collier rigide 120B, 130B, 140B de forme annulaire, qui se prolonge vers la partie de montage 110 par un tube flexible 120A, 130A, 140A.

Ici, les conduits 120, 130, 140 forment avec la partie de montage 110 une croix. Ainsi, l'un des conduits 130 s'étend dans l'axe de la partie de montage 110, tandis que les deux autres conduits 120, 140 s'étendent presque à angle droit par rapport à ceux-ci. Ces deux conduits 120, 140 sont ici plus précisément légèrement inclinés vers le premier conduit 130, à environ 80 degrés par rapport à celui-ci.

Les tubes flexibles 120A, 130A, 140A des conduits 120, 130, 140 communiquent alors tous avec le manchon flexible 111A de la partie de montage 110.

Comme le montre la figure 25, le manchon rigide 111B de la partie de montage 110 est bordé, sur trois des cotés de sa face externe, par une nervure 112A qui est adaptée à coulisser dans la rainure 62 prévue en creux dans le rebord 61 de l'ouverture d'entrée 60 du connecteur 1.

Grâce à elle, il est possible de rapporter l'embout 100 par l'arrière du connecteur 1, en faisant coulisser sa nervure 112A dans la rainure 62.

Pour bloquer l'embout 100 en position sur le connecteur 1 lorsque sa partie de montage 110 est située dans l'axe de l'ouverture d'entrée 60 du connecteur 1, la nervure 112A porte deux dents d'encliquetage 113A adaptées à se clipser dans deux encoches 63 prévues en creux dans la face intérieure du rebord 61 de l'ouverture d'entrée 60 du connecteur 1 (voir figure 24).

Comme le montrent les figures 25 et 26, le conduit 130, qui est situé dans l'axe de la partie de montage 110, présente ici un diamètre supérieur à celui des deux autres conduits 120, 140, de sorte qu'il peut recevoir des gaines de cheminement de plus grands diamètres.

De manière à assurer une étanchéité à la jonction entre la gaine de cheminement et le conduit dans lequel elle est introduite, le collier 120B, 130B 140B de chaque conduit 120, 130, 140 est partiellement obturé par une membrane annulaire souple 120C, 130C, 140C.

Chaque membrane annulaire souple 120C, 130C, 140C forme ici une rondelle plane qui borde intérieurement l'extrémité libre du conduit 120, 130, 140 correspondant et qui est prévue pour se déformer lorsqu'une gaine est enfilée à l'intérieur du conduit 120, 130, 140 correspondant.

Comme le montrent les figures 27 et 28, l'une des demi-coques 100A porte des pattes d'encliquetage 101A adaptées à s'encliqueter sur l'autre demi-coque 100B.

Il est ici plus précisément prévu une patte d'encliquetage 101A de part et d'autre de chaque demi-collier 120B 130B, 140B et de part et d'autre du demimanchon rigide 111B de la première demi-coque 100A. Des arceaux 101B sont prévus en correspondance sur l'autre demi-coque 100B, de manière que les pattes d'encliquetage 101A puissent les traverser et s'y clipser.

Puisque les conduits 120, 130, 140 sont ici en partie rigides, ils présentent une raideur suffisante pour assurer une bonne fixation des gaines de cheminement à l'embout 100.

Puisqu'ils sont en partie souples, ils permettent à l'embout 100 de se déformer de manière à faciliter la connexion des gaines de cheminement.

On comprend que lorsque l'embout 100 se déforme, les bords des parties souples des deux demi-coques 100A, 100B risquent de s'écarter l'un de l'autre, en créant des interstices.

C'est la raison pour laquelle, comme le montre bien la figure 27, le bord de la partie souple de la première demi-coque 100A est prolongé par des languettes 102A qui sont prévues pour s'appliquer contre la face interne de la partie souple de l'autre demi-coque 100B. Ainsi, lorsque l'installateur déforme l'embout 100, ces languettes 102A ferment les interstices qui se créent entre les bords des parties souples des deux demi-coques 100A, 100B.

On comprend que dans les différents modes de réalisation représentés sur les figures 1 à 17, il est nécessaire de prévoir deux références de connecteurs 1, l'une avec trois éléments de connexion et l'autre avec quatre éléments de connexion, selon que l'appareillage électrique que l'on souhaite y connecter comporte à l'arrière trois ou quatre broches plates.

Le nombre de références de connecteurs à prévoir est encore plus important lorsque l'on souhaite également proposer des connecteurs monopostes (figure 1) et des connecteurs multipostes (voir figures 15 et 16), puisqu'il est alors nécessaire de prévoir une référence monoposte à quatre éléments de connexion, une référence monoposte à trois éléments de connexion, une référence double-postes à quatre éléments de connexion, une référence double-postes à trois éléments de connexion, et une référence double-postes hybride (avec un poste à quatre éléments de connexion et un poste à trois éléments de connexion).

On comprend que lorsque s'ajoute à cela de nouvelles références, par exemple si l'on souhaite offrir des connecteurs ayant 1 ou 2 ou aucun élément(s) de connexion, le nombre de références de connecteurs à prévoir est très important, au détriment des coûts de fabrication et de stockage des connecteurs.

On comprend enfin qu'il faut doubler encore le nombre de références de connecteurs multipostes, pour mettre à disposition des connecteurs pouvant être montés verticalement dans la paroi (de telle manière que les postes se trouvent les uns au-dessus des autres), et des connecteurs pouvant être montés horizontalement dans la paroi (de telle manière que les postes se trouvent les uns à côté des autres).

En effet, les trois bornes d'entrée n'étant pas orientables par rapport au socle, elles imposent l'orientation des appareillages électriques par rapport au socle. Elles imposent donc l'orientation des appareillages électriques par rapport à la paroi. Or, à titre d'exemple, un interrupteur doit toujours être positionné sur la paroi de telle manière que sa touche de commande bascule autour d'un axe horizontal.

Il est donc nécessaire de prévoir une référence de connecteurs multipostes à monter verticalement dans la paroi de telle manière qu'ils puissent accueillir des appareillages électriques dans la position souhaitée par rapport à la paroi, et une autre référence de connecteurs multipostes à monter horizontalement dans la paroi de telle manière qu'ils puissent accueillir des appareillages électriques dans la position souhaitée par rapport à la paroi.

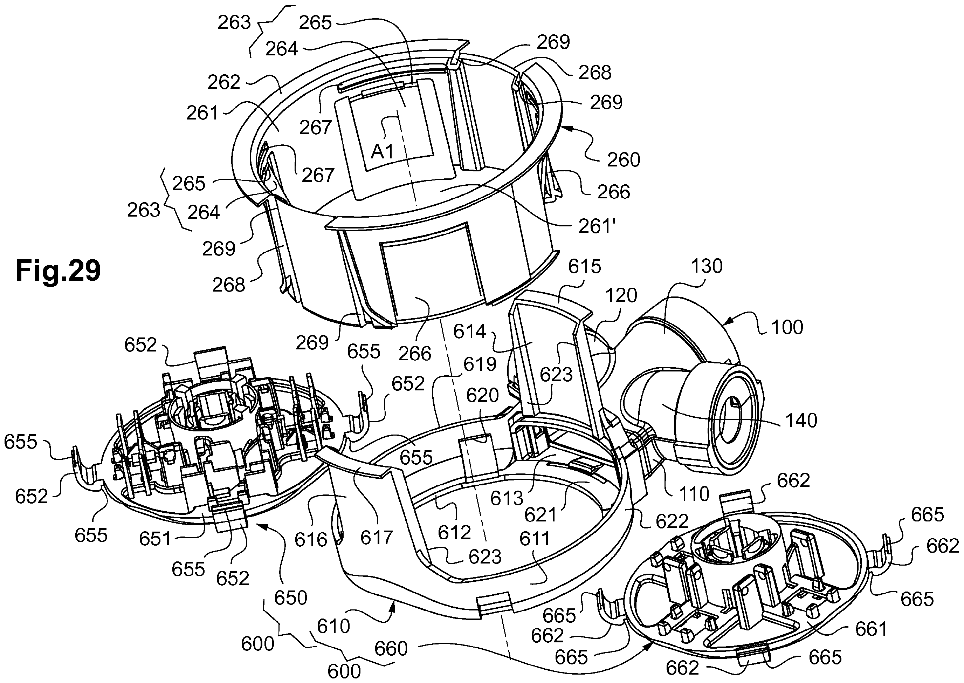

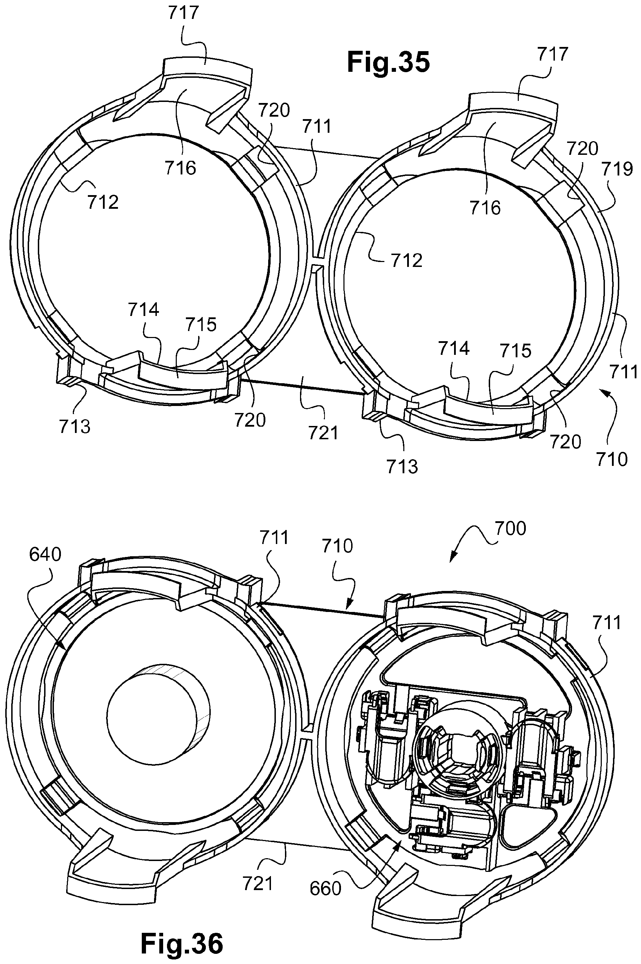

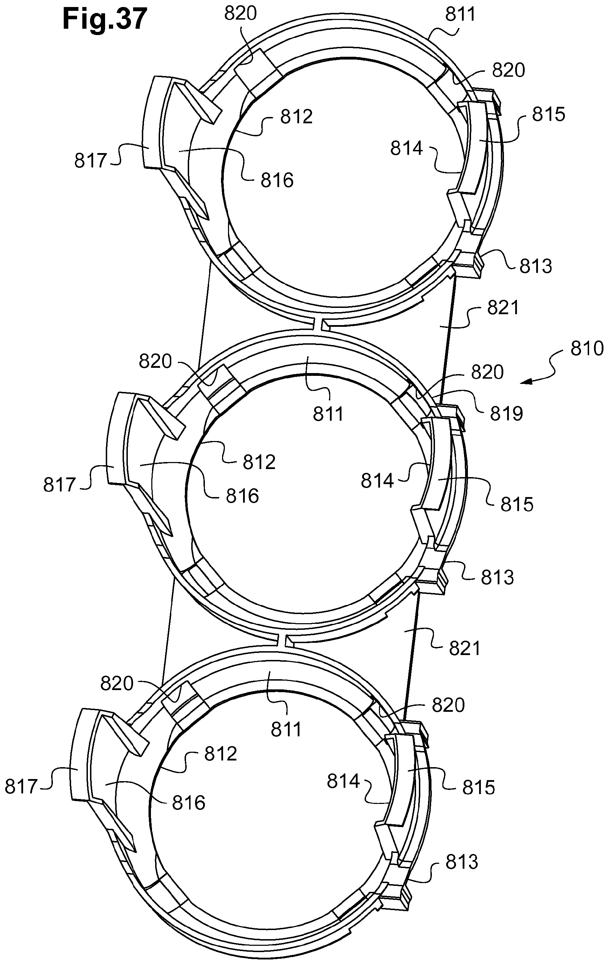

Dans le second mode de réalisation représenté sur les figures 29 à 34 et dans les deux variantes respectivement représentées sur les figures 35&36 et 37&38, le connecteur 600 ; 700 ; 800 forme un système modulaire, composé d'un support 610 ; 710 ; 810 (qui porte les bras) et d'au moins une cassette 640, 650, 660, 670, 680 amovible (qui peut être équipée de 0, 3 ou 4 élément(s) de connexion).

Ces cassettes sont fixées au support en usine ou par l'utilisateur, une fois que ce dernier a défini son besoin exact en éléments de connexion.

On comprend alors que pour satisfaire tous les besoins, il est seulement nécessaire de prévoir un support monoposte, un support double-postes et un support triple-postes, ainsi qu'une cassette à 0 élément de connexion, une cassette à 3 éléments de connexion et une cassette à 4 éléments de connexion.

Ces supports et ces cassettes seront bien décrits dans la suite de cet exposé.

Avant cela, on pourra décrire brièvement la boîte électrique 260 représentée sur la figure 29, qui est prévue pour être encastrée au travers de l'ouverture circulaire pratiquée dans la cloison creuse, pour recevoir intérieurement un appareillage électrique et pour recevoir par l'arrière le connecteur 600.

Cette boîte électrique 260 permet alors non seulement de fixer rigidement l'appareillage électrique dans la cloison creuse mais également de le protéger.

Telle que représentée sur la figure 29, cette boîte électrique 260 présente ici une forme générale cylindrique, mais elle pourrait bien entendu présenter une forme différente, notamment parallélépipédique.

Elle comporte une paroi latérale 261 tubulaire de révolution autour d'un axe principal A1, et est ouverte vers l'avant. La boîte électrique 260 délimite ainsi un logement intérieur d'accueil de l'appareillage électrique.

On pourra prévoir que la paroi latérale 261 soit fermée à l'arrière par un fond 261'. Toutefois, en variante, elle pourrait être laissée ouverte à l'arrière.

Pour sa fixation dans l'ouverture circulaire pratiquée dans le panneau de plâtre de la cloison creuse, la boîte électrique 260 comporte un trottoir extérieur 262 qui longe extérieurement le bord de l'ouverture avant de la paroi latérale 261 et qui est adapté à prendre appui contre la face avant du panneau de plâtre, autour de l'ouverture circulaire. Ainsi ce trottoir extérieur 262 permet-il de bloquer la boîte électrique 260 vers l'arrière.

Pour son blocage vers l'avant, la boîte électrique 260 comporte des moyens de fixation 263 qui sont adaptés à s'accrocher à l'arrière du panneau de plâtre.

Ces moyens de fixation pourraient se présenter sous la forme de griffes qui interviendraient en position diamétralement opposée sur la face externe de la paroi latérale, et qui, sous le contrôle de vis, pourraient venir s'accrocher à la face arrière du panneau de plâtre.

Ici, ces moyens de fixation 263 sont formés d'une seule pièce avec le reste de la boîte électrique 260.

Ils comportent des volets 264 rectangulaires découpés dans la paroi latérale 261 de la boîte électrique 260 de telle manière qu'ils se rattachent à celle-ci uniquement par leurs bords avant, ce dernier formant alors une sorte de charnière 265. Chaque volet 264 porte sur sa face extérieure une couche en matière compressible 266, qui est élastiquement déformable.

Chaque volet 264 est maintenu à l'intérieur de la boîte électrique 260, ce qui permet l'engagement de la boîte électrique 260 au travers de l'ouverture circulaire prévue dans le panneau de plâtre. Les volets 264 sont ensuite prévus pour être repoussés vers l'extérieur et bloqués dans cette position par l'appareillage électrique lorsqu'il est engagé dans la boîte électrique. La couche en matière compressible 266 est alors adaptée à se comprimer contre et s'accrocher à la face arrière du panneau de plâtre.

La boîte électrique 260 comporte également des moyens d'assujettissement 267 de l'appareillage électrique.

Ces moyens d'assujettissement pourraient se présenter sous la forme de puits de vissage qui s'élèveraient à partir du fond de la boîte électrique, vers l'avant, le long de la face intérieure de la paroi latérale, et qui accueilleraient des vis de fixation de l'appareillage électrique.

Ici, ces moyens d'assujettissement comportent plutôt deux cavités 267 diamétralement opposées, situées en creux dans la face intérieure de la paroi latérale 261 de la boîte électrique 260, dans lesquelles peuvent s'accrocher des moyens d'encliquetage prévus sur l'appareillage électrique.

Sur la figure 29, on a également représenté un support 610 et deux cassettes 650, 660 pouvant être indifféremment assemblées au support 610 pour former un connecteur 600.

Le support 610 comporte une paroi périphérique 611 qui délimite une ouverture principale 612 d'accueil de l'une des cassettes 650, 660, et une ouverture d'entrée 613 latérale de fils électriques.

Cette paroi périphérique 611 comporte des moyens d'accrochage 620 de l'une des cassettes 650, 660 dans son ouverture principale 612.

Elle délimite par ailleurs un bord avant 619.

Le support 610 comporte également deux bras 614, 616 distincts qui s'étendent à partir de la paroi périphérique 611, majoritairement à l'avant de son bord avant 619, et dont les extrémités libres présentent des moyens d'accrochage 615, 617 à la paroi.

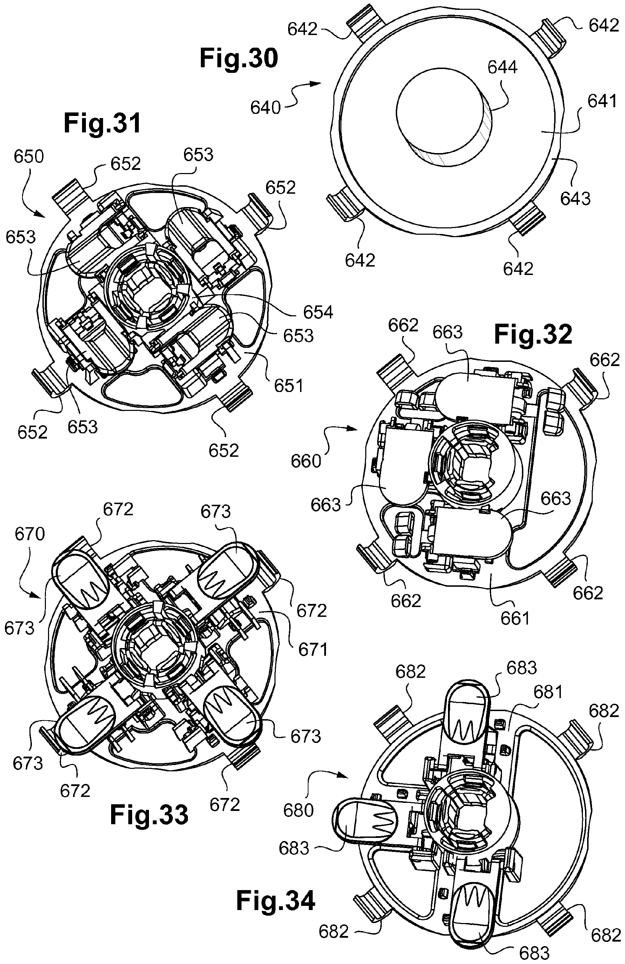

Sur les figures 30 à 34, on a représenté cinq cassettes 640, 650, 660, 670, 680 pouvant être fixées dans l'ouverture principale 612 du support 610.

Comme le montrent ces figures 30 à 34, chaque cassette 640, 650, 660, 670, 680 comporte une paroi de fond 641, 651, 661, 671, 681, et des moyens d'accrochage 642, 652, 662, 672, 682 de la paroi de fond 641, 651, 661, 671, 681 au support 610.

Ces moyens de fixation sont notamment prévus pour permettre le montage de la paroi de fond 641, 651, 661, 671, 681 sur le support 610 dans au moins deux positions angulaires différentes séparées l'une de l'autre de 90 degrés (la position étant choisie selon que l'on souhaite fixer le connecteur dans la paroi avec les deux bras l'un au-dessus de l'autre ou avec les deux bras l'un à côté de l'autre). De ce fait, l'appareillage électrique rapporté dans la boîte électrique 260 pourra être installé dans la position angulaire souhaitée (à titre d'exemple, un interrupteur pourra être installé de telle sorte que sa touche de commande bascule autour d'un axe horizontal).

La cassette 640 représentée sur la figure 30 est dépourvue d'élément de connexion. Elle est utilisée lorsque la boîte forme une simple boîte de dérivation ou lorsque la boîte électrique 260 est prévue pour recevoir un appareillage électrique ayant une fonction de prise VDI.

Les cassettes 650, 660, 670, 680 représentées sur les figures 31 à 34 comportent en revanche au moins un élément de connexion fixé à la paroi de fond 641, 651, 661, 671, 681, qui comprend une borne d'entrée pour la connexion d'un fil électrique et une borne de sortie accessible par l'avant de la paroi de fond pour la connexion d'au moins un appareillage électrique.

Dans le mode de réalisation représenté sur la figure 29, le socle du connecteur 600 est donc formé de deux parties pouvant être assemblées, à savoir du support 610 et de la paroi de fond 651, 661 de la cassette 650, 660 sélectionnée.

Préférentiellement, dans ce mode de réalisation, les moyens d'accrochage 620, 642, 652, 662, 672, 682 de la paroi de fond 641, 651, 661, 671, 681 au support 610 sont des moyens d'encliquetage déverrouillables, de sorte que l'utilisateur peut assembler la cassette au support sans outil, et qu'il peut également désunir ces deux éléments si nécessaire (cette fois, préférentiellement à l'aide d'un outil).

Le connecteur 600 est prévu pour se placer à l'arrière de la boîte électrique 260. Il présente alors une forme telle qu'il peut former un double-fond avec le fond de cette boîte.

Cette paroi de fond est à cet effet plane et globalement circulaire autour de l'axe principal A1.

Elle peut être entièrement fermée (cas de la figure 30) ou partiellement ouverte (cas des figures 31 à 34).

La paroi de fond 641 de la cassette peut éventuellement être bordée à l'avant par un rebord périphérique 643 de rigidification, de taille réduite (voir figure 30).

Comme le montre bien la figure 29, pour accueillir cette cassette, la paroi périphérique 611 du support 610 présente une partie plane annulaire 621 qui délimite l'ouverture principale 612 d'accueil de la cassette.

Cette partie plane annulaire 621 est bordée à l'avant par un rebord périphérique 622 adapté à venir en appui contre l'extrémité arrière de la paroi latérale 261 de la boîte électrique 260.

Ici, la paroi de fond 641, 651, 661, 671, 681 de chaque cassette est prévue pour être maintenue contre la partie plane annulaire 621 du support 610 grâce aux seuls moyens d'encliquetage déverrouillables précités.

Ces moyens d'encliquetage 642, 652, 662, 672, 682 comportent ici quatre pattes, régulièrement réparties autour de l'axe principal A1, qui s'étendent à partir du bord périphérique de la paroi de fond 641, 651, 661, 671, 681 de la cassette, vers l'extérieur, et dont les extrémités libres sont recourbées vers l'avant.

Comme le montre bien la figure 29, chaque patte 652, 662 présente à son extrémité libre avant et à son extrémité arrière une encoche 655, 665 en creux.

Les moyens d'encliquetage complémentaires prévus sur le support 610 comportent quant à eux quatre cavités 620 en creux dans la face interne du rebord périphérique 622.

Ces cavités 620 présentent à l'avant et à l'arrière des bords auxquels les encoches 655, 665 des pattes 652, 662 de chaque cassette peuvent s'accrocher.

Ces cavités 620 présentent des largeurs identiques, au jeu de montage près, aux largeurs des pattes 642, 652, 662, 672, 682 de chaque cassette, si bien que leurs bords latéraux forment des butées qui empêchent la cassette encliquetée dans le support 610 de pivoter par rapport à celui-ci.

On comprend donc que les moyens d'encliquetage utilisés permettent de bloquer toute mobilité de la cassette par rapport au support 610.

Les deux bras 614, 616 du support 610 sont prévus pour permettre de positionner le connecteur sur le panneau de plâtre, avant de rapporter la boîte électrique 260 dans l'ouverture circulaire pratiquée dans ce panneau de plâtre.

Les deux bras 614, 616 s'étendent sur des longueurs telles qu'une fois accrochés au panneau de plâtre, ils maintiennent la paroi périphérique 611 du support 610 à l'arrière et à distance de ce panneau de plâtre, quelle que soit l'épaisseur de ce panneau comprise entre 6 et 26 millimètres.

Ici, ces deux bras 614, 616 s'étendent entièrement à l'avant de la paroi périphérique 611, à partir du bord avant 619 de la paroi périphérique 611.

Grâce à l'espace ainsi laissé libre entre le bord avant 619 de la paroi périphérique 611 du support 610 et le panneau de plâtre 300, il est possible de facilement refouler la ou les gaines de cheminement dans la cloison creuse, en guidant chaque gaine manuellement de manière qu'elle se place dans la direction souhaitée.

Ici, les deux bras 614, 616 sont situés à l'opposé l'un de l'autre par rapport à l'axe principal A1. Ils s'étendent à partir du bord avant 619, dans le prolongement de la paroi périphérique 611, et dans des directions parallèles.

Ces deux bras 614, 616 sont droits. Plus précisément, ils présentent ici des formes globalement rectangulaires, aves deux bords latéraux rectilignes, et un bord d'extrémité avant en arc-de-cercle.

Les bords latéraux des deux bras 614, 616 sont repliés à angle droit vers l'intérieur du connecteur afin de former deux nervures 623, pour une raison qui sera détaillée dans la suite de cet exposé.

Les bords d'extrémité avant des deux bras 614, 616 sont circonscrits à un même cercle qui est centré sur l'axe principal A1 et qui présente un diamètre égal à celui de l'ouverture circulaire pratiquée dans le panneau de plâtre.

Les extrémités avant de ces deux bras 614, 616 sont recourbées vers l'extérieur, de manière à former des rebords 615, 617 qui s'étendent radialement à partir des bords d'extrémité avant des deux bras 614, 616, dans des directions opposées. Ces rebords 615, 617 sont ainsi adaptés à s'appuyer contre la face avant du panneau de plâtre, si bien qu'ils forment lesdits « moyens d'accrochage » des bras 614, 616 à la paroi.

Les bras 614, 616 viennent ici de formation d'une seule pièce avec le support 610, par moulage d'une matière plastique.

Comme le montre la figure 29, une fois le connecteur 600 en place dans le panneau de plâtre, le risque est que ses bras 614, 616 forment obstacle à l'engagement de la boîte électrique 260 dans ce même panneau de plâtre.

Pour éviter toute interférence entre la boîte électrique 260 et le connecteur 600, la paroi latérale 261 de la boîte électrique 260 présente, en creux dans sa face extérieure, deux renfoncements 268 dont les dimensions sont ajustées à celles des bras 614, 616 du connecteur 600, pour permettre le passage de ces dernier.

Les bords de ces deux renfoncements 268 sont rainurés par des rails 269 d'axes parallèles à l'axe principal A1. Ces rails 269 sont ajustés pour accueillir les nervures 623 prévues sur les bords des bras 614, 616. De cette manière, ils permettent de guider le coulissement de la boîte électrique 260 entre les deux bras 614, 616. Ces rails 269 sont évasés vers l'arrière, pour faciliter leur engagement sur les nervures 623 des bras 614, 616.

Les nervures 623 présentent des formes identiques, en négatif, à celles des rails 269, si bien qu'une fois la boîte électrique 260 rapportée sur le support 610, les rails 269 empêchent tout mouvement de pivotement de la boîte électrique 260 par rapport au support 610.

Les nervures 623 et les rails 269 permettent donc d'améliorer la solidarisation de la boîte électrique 260 au support 610. Ils assurent en outre une fonction de détrompage, dans la mesure où ils empêchent l'installateur de monter la boîte électrique 260 dans le support 610 avec une position angulaire autre que celle prescrite.

On observe également sur la figure 29 que le trottoir extérieur 262 de la boîte électrique 260 est interrompu dans le prolongement des deux renfoncements 268, pour permettre le passage des rebords 615, 617.

Le support 610 délimite ici une unique ouverture d'entrée 613 qui est prévue pour être traversée par les fils électriques gainés. Il comporte ici des moyens d'assujettissement d'un embout 100 pour la connexion d'une, deux ou trois gaines de cheminement de câbles.

Ici, l'ouverture d'entrée 613, qui permet le passage des fils électriques gainés depuis l'extérieur du support 610 vers l'intérieur et l'avant de ce support 610, présente une forme rectangulaire, de section suffisante pour permettre le passage simultané d'au moins six fils électriques gainés.

Cette ouverture d'entrée 613 est préférentiellement située dans le prolongement d'un premier des deux bras 614 à cheval sur la partie plane annulaire 621 et le rebord périphérique 622 du support 610.

En variante, elle pourrait se prolonger jusqu'à l'ouverture principale 612 du support 610, si bien qu'elle formerait une « encoche » dans le bord de cette ouverture principale 612.

Comme cela apparaît sur la figure 29, le connecteur 600 comporte un embout 100 conçu pour assurer le maintien de la ou des gaines de cheminement de câble relativement au support 610 et pour assurer une étanchéité entre ces deux éléments.

Dans ce mode de réalisation, l'embout 100 présente une partie de montage sur le support 610, et trois parties d'assujettissement de gaines, qui se présentent sous la forme de trois conduits 120, 130, 140 pour accueillir les extrémités libres de trois gaines de cheminement différentes.

Cet embout 100 présente une partie flexible, ici réalisée en SEBS, sur laquelle sont surmoulées des parties rigides, ici réalisées en polypropylène.

Ainsi, la partie de montage 110 de l'embout 100, qui présente une forme de tube de section rectangulaire, comporte une partie flexible qui se prolonge, du côté de son extrémité libre, par un manchon rigide. Ce manchon rigide est alors équipé de moyens de montage par glissière sur le support 610, dans l'axe de l'ouverture d'entrée 613, et de moyens d'encliquetage sur le support 610.

De la même manière, chaque conduit 120, 130, 140 comporte une partie flexible qui se prolonge, du côté de son extrémité libre, par un collier rigide de forme annulaire.

Ici, les conduits 120, 130, 140 forment avec la partie de montage 110 une croix. Ainsi, l'un des conduits 130 s'étend dans l'axe de la partie de montage 110, tandis que les deux autres conduits 120, 140 s'étendent presque à angle droit par rapport à ceux-ci.

Le conduit 130, qui est situé dans l'axe de la partie de montage 110, présente ici un diamètre supérieur à celui des deux autres conduits 120, 140, de sorte qu'il peut recevoir des gaines de cheminement de plus grands diamètres.

De manière à assurer une bonne tenue mécanique de la gaine de cheminement dans le conduit dans lequel elle est introduite, le collier de chaque conduit 120, 130, 140 est partiellement obturé par une membrane annulaire souple. Chaque membrane annulaire souple forme ici une rondelle plane qui borde intérieurement l'extrémité libre du conduit 120, 130, 140 correspondant et qui est prévue pour se déformer lorsqu'une gaine est enfilée à l'intérieur du conduit 120, 130, 140 correspondant.

Puisque les conduits 120, 130, 140 sont ici en partie rigides, ils présentent une raideur suffisante pour assurer une bonne fixation des gaines de cheminement à l'embout 100.

Puisqu'ils sont en partie souples, ils permettent à l'embout 100 de se déformer de manière à faciliter la connexion des gaines de cheminement.

On peut maintenant décrire en détail la forme des cassettes 640, 650, 660, 670, 680 représentées sur les figures 30 à 34.

La cassette 640 représentée sur la figure 30 est dépourvue d'éléments de connexion. Elle est plus généralement dépourvue de tout composant électrique.

Elle est uniquement conçue pour fermer le fond du connecteur 600 et de la boîte électrique 260.

Elle est utilisée lorsque le câble électrique ou la fibre optique issue du réseau local est directement connectée à l'appareillage électrique rapporté dans la boîte électrique 260, ce qui est notamment le cas lorsque cet appareillage électrique à une fonction de prise VDI.

Ici, la paroi de fond 641 de la cassette 640 est pleine et elle porte au centre de sa face avant un plot cylindrique 644.

La cassette 650 représentée sur la figure 31 comporte quatre éléments de connexion distincts.

Elle est par exemple utilisée lorsque l'appareillage électrique rapporté dans la boîte électrique 260 a une fonction de va-et-vient.

Ici, la paroi de fond 651 de la cassette 650 a une forme de croix à quatre branches inscrite dans un anneau (c'est-à-dire une forme de croix celtique).

Elle porte sur chacune de ses quatre branches l'un des éléments de connexion électrique.

Ces éléments de connexion n'apparaissent pas sur la figure 31.

On pourra toutefois brièvement les décrire. Ainsi, ils sont ici identiques et ils comprennent chacun une borne d'entrée pour la connexion de l'un des fils électriques gainés, et une borne de sortie accessible par l'avant de la paroi de fond 651 pour la connexion des broches de l'appareillage électrique.

Ces éléments de connexion sont fixés dans des logements d'accueil qui sont isolés les uns des autres et qui sont délimités par des cloisons s'élevant à partir de la face avant de la paroi de fond 651.

Ces éléments de connexion sont tous issus de découpe et de pliage d'un feuillard métallique.

Leurs bornes d'entrée pourraient être de type automatique. Ainsi ces bornes d'entrée pourraient-elles par exemple chacune comporter une lame-ressort délimitant un conduit d'insertion et de blocage automatique d'une extrémité dénudée d'un fil électrique gainé.

Il pourrait également s'agir de bornes à vis, comportant des vis adaptées à bloquer et à connecter les fils électriques gainés.

Ici, pour faciliter le travail de l'installateur, il s'agit plutôt de bornes à connexion rapide, équipées chacune d'un levier de manœuvre 653.

Comme le montre la figure 31, chaque levier de manœuvre 653 présente ici une forme de plaquette rectangulaire montée mobile en rotation par rapport à la paroi de fond 651, entre une position ouverte dans laquelle il découvre la borne d'entrée pour permettre d'y rapporter l'un des fils électriques gainés, et une position fermée dans laquelle il bloque ce fil électrique dans la borne d'entrée.

Ici, chaque levier de manœuvre 653 est monté mobile en rotation sur la paroi de fond. En variante, il pourrait être monté mobile sur la borne d'entrée elle-même.

La paroi de fond 651 porte à cet effet en face avant des montant dans lesquels sont engagés des tourillons prévus de part et d'autre de chaque levier de manœuvre 653.

Pour leur maintien en position fermée, les leviers de manœuvre 653 comportent sur leurs bords des rainures dans lesquelles sont adaptées à s'encliqueter des dents portées par des pattes d'encliquetage qui s'élèvent à partir de la paroi de fond 651.

Pour trancher la gaine du ou des fils électriques gainés qui y sont rapportés, chaque borne d'entrée délimite des fentes aiguisées pour trancher les gaines isolantes des fils électriques gainés afin d'établir une connexion électrique.

Les éléments de connexion sont disposés sur la paroi de fond 651 de telle manière que leurs bornes de sortie sont contigües (c'est-à-dire situées à proximité les unes des autres, ici à proximité du centre de la paroi de fond 651, dans un plot cylindrique 654) et que leurs bornes d'entrée sont situées à distance les unes des autres.

Ils sont par ailleurs positionnés de telle manière que l'axe de pivotement de chaque levier de manœuvre est parallèle à la branche de la paroi de fond 651 en forme de croix qui le porte.

Sur la variante de la figure 33, les leviers de manœuvre 673 sont au contraire positionnés sur la paroi de fond 671 de telle manière que l'axe de pivotement de chaque levier de manœuvre est perpendiculaire à la branche de la paroi de fond 671 en forme de croix qui le porte.

L'avantage de cette configuration est que, lorsqu'un fil électrique est rapporté dans la borne d'entrée de cet élément de connexion et qu'il dépasse de part et d'autre du levier de manœuvre 673, il est possible de le couper à la longueur souhaité après que le levier de manœuvre a été rabattu, ce qui facilite le travail de l'installateur.

La cassette 660 représentée sur la figure 32 comporte trois éléments de connexion distincts.

Elle peut par exemple être utilisée lorsque l'appareillage électrique rapporté dans la boîte électrique 260 a une fonction de prise de courant.

Ici, la paroi de fond 661 de la cassette 660 a une forme de T inscrit dans un anneau.

Elle porte sur chacune des trois branches du T l'un des éléments de connexion électrique.

Ces éléments de connexion n'apparaissent pas sur la figure 32. Ils sont de formes identiques à ceux décrits en référence à la figure 31.

Ainsi, ils sont chacun équipés d'un levier de manœuvre 663 monté mobile en rotation sur la paroi de fond 661.

Ces levier de manœuvre 663 sont ici positionnés de telle manière que l'axe de pivotement de chaque levier de manœuvre est parallèle à la branche de la paroi de fond 661 en forme de T qui le porte.

Sur la variante de la figure 34, les leviers de manœuvre 683 sont au contraire positionnés de telle manière que l'axe de pivotement de chaque levier de manœuvre est perpendiculaire à la branche de la paroi de fond 681 en forme de T qui le porte.

On peut maintenant exposer en détail la mise en place et la connexion d'un appareillage électrique dans une cloison creuse, au moyen du connecteur 600.

Initialement, une ouverture circulaire est pratiquée à la scie cloche dans le panneau de plâtre de la cloison creuse, de telle manière que l'extrémité libre d'une gaine de cheminement puisse être tirée à l'extérieur de la cloison creuse, au travers de cette ouverture circulaire.

Après avoir sélectionné un appareillage électrique à engager dans cette ouverture circulaire, l'installateur assemble le support 610 avec l'une des cassettes 640, 650, 660, 670, 680, celle adaptée à être utilisée avec l'appareillage électrique sélectionné.

Les extrémités des fils électriques gainés sortant de la gaine de cheminement sont alors engagées au travers de l'embout 100 et de l'ouverture d'entrée 613 du support 610, puis l'extrémité de la gaine de cheminement est bloquée dans l'un des conduits tubulaires de l'embout 100.

Après avoir soulevé les leviers de manœuvre portés par la cassette sélectionnée, l'installateur engage les fils électriques isolés dans les éléments de connexion, puis il rabat ces leviers de manœuvre en position fermée, ce qui a pour effet de forcer les fils électriques isolés à s'engager dans les fentes des bornes d'entrée.

Le connecteur 600 est ensuite mis en place au travers de l'ouverture circulaire pratiquée dans le panneau de plâtre, tout d'abord en l'y engageant par son côté duquel émerge la gaine de cheminement, puis en le faisant basculer sans difficulté dans l'ouverture circulaire.

Le connecteur 600 est placé d'autant plus facilement dans la cloison creuse que, grâce à la faible épaisseur de la paroi périphérique 611 du support 610 et à l'élasticité des pattes 614, 616, l'installateur garde un accès à la ou aux gaines de cheminement pendant l'installation du connecteur dans la paroi, de manière qu'il peut les refouler dans la direction souhaitée avec plus de facilité.

Le connecteur 600 est considéré en place lorsque les rebords 615, 617 des bras 614, 616 sont en appui contre la face avant du panneau de plâtre.

Reste alors pour l'installateur à engager la boîte électrique 260 au travers de l'ouverture circulaire pratiquée dans le panneau de plâtre, ce qui est fait sans difficulté grâce aux rails 269 prévus en creux dans la face externe de la paroi latérale 261 de la boîte électrique 260.

La boîte électrique est considérée en place lorsque son fond est en appui contre le support 610.

Sur les figures 35 à 38, on a représenté deux variantes de réalisation du connecteur 600 représenté sur la figure 29.

Dans ces deux variantes, le support 710; 810 présente une forme différente du support 610, puisqu'est spécifiquement conçu pour accueillir entre ses bras une boîte multiposte, c'est-à-dire une boîte adaptée à accueillir deux ou trois appareillages électriques.

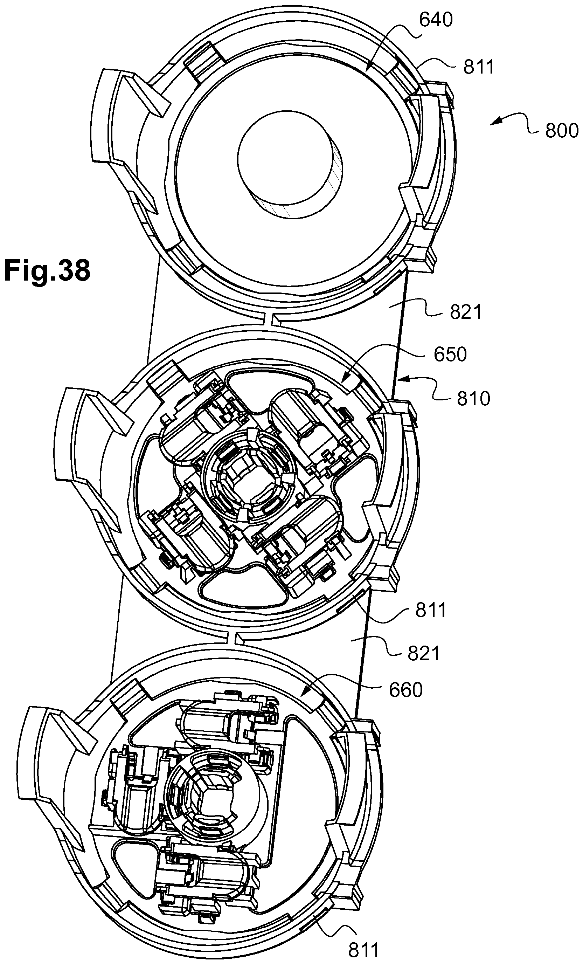

Comme le montrent les figures 36 et 38, dans ces deux variantes, le support 710 ; 810 du connecteur 700 ; 800 sera adapté à recevoir deux ou trois cassettes 640, 650, 660, 670, 680 identiques à celles représentées sur les figures 30 à 34.

Le support 710 ; 810 délimite à cet effet respectivement deux ou trois postes distincts, qui sont identiques au support 610 représenté sur la figure 29 et qui sont joints par deux via des parois de jonction 721 ; 821 planes.

Chaque poste présente ainsi notamment une ouverture principale 712 ; 812 d'accueil d'une cassette, et une ouverture d'entrée 713 ; 813 pour des fils électriques gainés.

Les bords avant des parois périphériques 711 ; 811 de ces supports sont ici coplanaires, et les bras 714, 716 ; 814, 816 de ces supports s'étendent à partir de ces bords avant, vers l'avant.

Il est préférentiellement prévu que chacun de ces supports 710 ; 810 comporte au moins trois bras distincts. En pratique, ici, chaque poste comporte deux bras 714, 716 ; 814, 816 distincts, dont les extrémités libres 715, 717 ; 815, 817 sont repliées pour pouvoir s'accrocher à l'avant du panneau de plâtre.

Ici, chaque poste comporte sa propre ouverture d'entrée 713 ; 813 de fils électriques gainés, mais en variante, on pourrait prévoir une seule et unique ouverture d'entrée commune aux deux ou trois postes.

Selon une autre variante de l'invention non représentée, on aurait pu prévoir que les formes des bras et de leurs moyens d'accrochage à la paroi soient différentes de celles des bras et des moyens d'accrochage représentés sur les figures.

Ainsi, les bras pourraient être légèrement courbés vers l'extérieur afin de générer un effet de ressort leur permettant de s'accrocher plus rigidement au bord de l'ouverture circulaire pratiquée dans le panneau de plâtre.

Selon une autre variante, les bras pourraient être légèrement courbés en leurs centres vers l'intérieur, de manière à pouvoir pincer la boîte électrique lorsque cette dernière est engagée dans la paroi.

Les moyens d'accrochage pourraient quant à eux se présenter sous la forme d'une simple couche souple surmoulée sur les faces extérieures des bras, auquel cas la fixation du connecteur à la paroi se ferait par simple friction de cette couche souple contre le bord de l'ouverture pratiquée dans le panneau de plâtre.

Les moyens d'accrochage pourraient également être formés par les bras eux-mêmes, pour autant que ces derniers soient agencés de telle manière que l'installateur soit forcé de les faire fléchir l'un vers l'autre pour engager le connecteur dans la paroi afin que, lorsqu'ils les relâchent, ces bras s'appuient rigidement contre le bord de l'ouverture pratiquée dans le panneau de plâtre.

Les moyens d'accrochage pourraient aussi se présenter sous la forme de pattes d'encliquetage découpées dans les bras, qui viendraient s'accrocher à l'arrière du panneau de plâtre lorsque les rebords des pattes viendraient s'appuyer contre la face avant de ce panneau de plâtre.

Les moyens d'accrochage pourraient aussi se présenter sous la forme de crans adaptés à venir s'ancrer dans le bord de l'ouverture circulaire pratiquée dans le panneau de plâtre.

Par ailleurs, si sur les figures l'ouverture d'entrée prévue dans le socle pour le passage des fils électriques présente un contour fermé, on pourrait en variante prévoir qu'elle présente un contour ouvert. Elle pourrait ainsi être formée par une encoche prévue dans le rebord périphérique du socle, auquel cas la gaine de cheminement viendrait se bloquer contre le bord de cette encoche et serait ensuite maintenu en position par le fond de la boîte électrique.

## Revendications

1. Ensemble comportant :
- un connecteur (1) à encastrer dans une paroi (300), qui comprend :
• un socle (10) qui délimite une ouverture d'entrée (11 ; 60) latérale pour au moins un conducteur électrique (401, 402, 403) et qui présente un bord avant,
• au moins deux bras (14, 16) distincts qui s'étendent à partir du socle (10), majoritairement à l'avant du bord avant du socle (10), et dont les extrémités libres présentent des moyens d'accrochage (15, 17) à la paroi (300), et
- une boîte électrique (200 ; 260) destinée à accueillir un appareillage électrique et comportant des moyens de fixation à la paroi (300) et une paroi latérale (210 ; 261) qui présente extérieurement au moins deux rainures (214, 216 ; 268) de passage des bras (14, 16 ; 614, 616) du connecteur (1 ; 600 ; 700 ; 800) et qui est fermée à l'arrière par un fond (220),
**caractérisé en ce que** le connecteur comprend au moins un élément de connexion (31, 32, 33) fixé au socle (10), qui comprend une borne d'entrée (31A, 32A, 33A) pour la connexion dudit conducteur électrique (401, 402, 403) et une borne de sortie (31B, 32B, 33B) accessible par l'avant du socle (10) pour la connexion d'au moins un appareillage électrique, et
**en ce que** le fond (220) de la boîte électrique (200 ; 260) présente au moins une ouverture d'accès (221) aux bornes de sortie (31B, 32B, 33B) des éléments de connexion (31, 32, 33) du connecteur (1).

2. Ensemble (1) selon la revendication 1, dans lequel le socle (10) comporte une paroi de fond (12) qui est bordée à l'avant par un rebord périphérique (13).

3. Ensemble comportant ;
- un support (610 ; 710 ; 810) de connecteur à encastrer dans une paroi (300), qui comprend :
• une paroi périphérique (611 ; 711 ; 811) qui délimite au moins une encoche ou une ouverture d'entrée (613 ; 713 ; 813) latérale pour au moins un conducteur électrique, et qui présente un bord avant (619; 719; 819),
• au moins deux bras (614, 616 ; 714, 716 ; 814, 816) distincts qui s'étendent à partir de la paroi périphérique (611 ; 711 ; 811), majoritairement à l'avant du bord avant (619 ; 719 ; 819) de la paroi périphérique (611 ; 711 ; 811), et dont les extrémités libres présentent des moyens d'accrochage (615, 617 ; 715, 717 ; 815, 817) à la paroi (300), et
- une boîte électrique (200 ; 260) destinée à accueillir un appareillage électrique et comportant une paroi latérale (210 ; 261) qui présente extérieurement au moins deux rainures (214, 216 ; 268) de passage des bras (14, 16 ; 614, 616) du support de connecteur et qui est fermée à l'arrière par un fond (220), ,
**caractérisé en ce que** la paroi périphérique (611 ; 711 ; 811) du support (610; 710; 810) délimite au moins une ouverture principale (612; 712; 812) d'accueil d'une cassette (640, 650, 660, 670, 680),
**en ce que** le support (610; 710; 810) comporte des moyens d'accrochage (620 ; 720 ; 820) de ladite cassette (640, 650, 660, 670, 680) dans ladite ouverture principale (612 ; 712 ; 812),
**en ce qu'**il est prévu une cassette (650, 660, 670, 680) de connecteur à encastrer dans une paroi (300), comportant :
• une paroi de fond (651, 661, 671, 681),
• des moyens d'accrochage (652, 662, 672, 682) de la paroi de fond (651, 661, 671, 681) audit support (610 ; 710 ; 810), et
• au moins un élément de connexion fixé à la paroi de fond (651, 661, 671, 681), qui comprend une borne d'entrée pour la connexion d'un conducteur électrique et une borne de sortie accessible par l'avant de la paroi de fond (651, 661, 671, 681) pour la connexion d'au moins un appareillage électrique, et
**en ce que** le fond (220) de la boîte électrique (200 ; 260) présente au moins une ouverture d'accès (221) aux bornes de sortie des éléments de connexion de la cassette (650, 660, 670, 680).

4. Ensemble selon la revendication précédente, dans lequel la paroi périphérique (711 ; 811) du support délimite au moins deux ouvertures principales (712 ; 812) identiques, et dans lequel le support comporte au moins trois bras (714, 716 ; 814, 816) distincts.

5. Ensemble selon l'une des revendications 3 et 4, dans lequel la cassette (650, 660, 670, 680) est fixée dans l'ouverture principale (612 ; 712 ; 812) dudit support (610 ; 710 ; 810) de telle sorte que le support (610 ; 710 ; 810) et la paroi de fond (651, 661, 671, 681) de la cassette (650, 660, 670, 680) forment ensemble un socle uni.

6. Ensemble selon la revendication précédente, dans lequel les moyens d'accrochage (620 ; 720 ; 820, 652, 662, 672, 682) de la paroi de fond (651, 661, 671, 681) au support (610; 710; 810) sont des moyens d'encliquetage déverrouillables.

7. Ensemble selon l'une des revendications 1 à 6, dans lequel ladite ouverture d'entrée (11 ; 60 ; 613 ; 716 ; 813) est située dans le prolongement d'un premier des bras (14 ; 614 ; 714 ; 814).

8. Ensemble selon l'une des revendications 1 à 7, dans lequel lesdits moyens d'accrochage sont formés par les extrémités libres (15, 17 ; 615, 617 ; 715, 717 ; 815, 817) des bras (14, 16 ; 614, 616 ; 714, 716 ; 814, 816) qui sont recourbées vers l'extérieur.

9. Ensemble selon l'une des revendications 1 à 8, dans lequel il est prévu un embout (100) qui délimite au moins un passage (101, 102) pour ledit conducteur électrique (401, 402, 403) et qui comporte une partie de montage (110) pour son montage sur le socle (10), dans l'axe de ladite ouverture d'entrée (11 ; 60), et au moins une partie d'assujettissement (120, 130, 140) pour l'assujettissement d'une gaine de cheminement (400) logeant ledit conducteur électrique (401, 402, 403).

10. Ensemble selon la revendication 9, dans lequel la partie de montage (110) est conformée pour laisser au moins une mobilité de rotation à l'embout (100) par rapport au socle (10), autour d'un axe incliné par rapport aux axes selon lesquelles les bras (14, 16) s'étendent, et dans lequel le socle (10) comporte des moyens d'indexation pour bloquer la rotation de l'embout (100) par rapport au socle (10).

11. Ensemble selon la revendication 9, dans lequel la partie de montage (110) est conformée pour bloquer fixement l'embout (100) par rapport au socle (10) et dans lequel chaque partie d'assujettissement (120, 130) comporte une zone de jonction (126, 136) à ladite partie de montage (110) qui est flexible manuellement.

12. Ensemble selon la revendication 9, dans lequel la partie de montage (110) comporte des moyens de glissière (112A) permettant de ramener l'embout (100) dans l'axe de l'ouverture d'entrée (11 ; 60), et des dents d'encliquetage permettant de bloquer dans cette position l'embout (100) par rapport à l'ouverture d'entrée (11 ; 60).

13. Ensemble selon l'une des revendications 9 à 12, dans lequel chaque partie d'assujettissement (120, 130, 140) comporte un conduit tubulaire (121, 131) équipé intérieurement d'un moyen de retenue (122, 132) de la gaine de cheminement (400) et dans lequel chaque conduit tubulaire comporte une partie flexible (120A, 130A, 140A) prolongée à son extrémité libre par un collier rigide (120B, 130B, 140B).

14. Ensemble selon l'une des revendications 9 à 13, dans lequel il est prévu au moins deux parties d'assujettissement (120, 130) distinctes.

15. Ensemble selon les revendications 13 et 14, dans lequel les conduits tubulaires (121, 131) des deux parties d'assujettissement (120, 130) s'étendent côte-à-côte, en parallèle l'un de l'autre.

16. Ensemble selon l'une des revendications 9 à 15, dans lequel chaque partie d'assujettissement (120, 130) comporte une succession de tubes (125, 135) de diamètres différents.

17. Ensemble selon l'une des revendications 9 à 16, dans lequel ledit embout (100) est formé d'une seule pièce par moulage.

18. Ensemble selon l'une des revendications 1 à 17, dans lequel le socle (10) comportant une paroi de fond (12, 651, 661, 671, 681) qui porte en face avant des cloisons (20), ces cloisons (20) délimitent des logements d'accueil (21, 22, 23) isolés qui accueillent lesdits éléments de connexion (31, 32, 33).

19. Ensemble selon l'une des revendications 1 à 18, dans lequel la borne d'entrée (31A, 32A, 33A) de chaque élément de connexion (31, 32, 33) présente au moins une fente dont les bords sont aiguisés pour trancher les gaines isolantes des conducteurs électriques (401, 402, 403).

20. Ensemble selon la revendication précédente, dans lequel la borne d'entrée (31A, 32A, 33A) de chaque élément de connexion (31, 32, 33) est équipée d'un levier de manœuvre (41, 42, 43) adapté à forcer le conducteur électrique (401, 402, 403) à s'engager dans ladite fente.

21. Ensemble selon la revendication précédente, dans lequel, le socle (10) comportant une paroi de fond (12, 651, 661, 671, 681), chaque levier de manœuvre (41, 42, 43) est monté mobile en rotation autour d'un axe parallèle à la paroi de fond (12, 651, 661, 671, 681).

22. Ensemble selon la revendication précédente, dans lequel les projetés orthogonaux, sur le plan de la face avant de la paroi de fond, de l'axe de rotation d'au moins un levier de manœuvre (41, 42, 43) et de l'axe de l'ouverture d'entrée (11) sont parallèles.

23. Ensemble selon l'une des revendications 1 à 22, dans lequel il est prévu plusieurs éléments de connexion (31, 32, 33) qui sont disposés de telle manière que leurs bornes de sortie (31B, 32B, 33B) sont contigües et que leurs bornes d'entrées (31A, 32A, 33A) sont situées à distance les unes des autres.

24. Ensemble selon la revendication précédente, dans lequel il est prévu un capot (50) d'isolation desdits éléments de connexion (31, 32, 33), qui comporte des moyens de fixation au socle (10) et au moins une ouverture d'accès à l'une des bornes de sortie (31B, 32B, 33B) des éléments de connexion (31, 32, 33).

25. Ensemble selon l'une des revendications 1 à 24, dans lequel le socle (510) délimite au moins deux postes distincts (510A, 510B) dans chacun desquels il est prévu une ouverture d'entrée (511) et au moins deux éléments de connexion, et dans lequel il est prévu au moins trois bras (514, 516) distincts.

26. Ensemble selon l'une des revendications 1 à 25, dans lequel la paroi latérale (210) de la boîte électrique (200) est fermée à l'arrière par un fond (220) qui présente au moins une ouverture d'accès (221) aux bornes de sortie (31B, 32B, 33B) des éléments de connexion (31, 32, 33) du connecteur (1), et dans lequel ladite ouverture d'accès (221) est fermée par un opercule (222) détachable ou défonçable.

27. Ensemble selon la revendication précédente, dans lequel le bord de ladite ouverture d'accès (221) est recouvert par un joint d'étanchéité (224).

28. Ensemble selon les deux revendications précédentes, dans lequel ledit opercule (222) est surmoulé sur une partie du fond (220) de manière à présenter, d'une part, un renflement qui longe intérieurement le bord de ladite ouverture d'accès (221) afin de former ledit joint d'étanchéité (224), et, d'autre part, une ligne d'arrachement de moindre épaisseur qui longe intérieurement le bord dudit renflement.

29. Ensemble selon l'une des revendications 1 à 28, dans lequel la paroi latérale (210) de la boîte électrique (200) est bordée à l'avant par un trottoir extérieur (230) qui est interrompu pour le passage des bras (14, 16) du connecteur (1).

30. Méthode de montage d'un ensemble selon l'une des revendications 1 à 29 dans une cavité (301) pratiquée dans une paroi (300), comportant des étapes consistant à :
- enfiler un conducteur électrique (401, 402, 403) au travers de l'ouverture d'entrée (11 ; 613, 713, 813) du socle (10) du connecteur (1 ; 600 ; 700 ; 800),
- connecter ledit conducteur électrique (401, 402, 403) à la borne d'entrée (31A, 32A, 33A) de l'élément de connexion (31, 32, 33) du connecteur (1 ; 600 ; 700 ; 800),
- engager le connecteur (1 ; 600 ; 700 ; 800) dans ladite cavité (301) de telle manière que les moyens d'accrochage (15, 17 ; 615, 617 ; 715, 715 ; 815, 815) prévus aux extrémités libres des bras (14, 16 ; 616, 617 ; 714, 716 ; 814, 816) s'accrochent à la paroi (300).

31. Méthode de montage selon la revendication précédente, comportant, après ladite étape d'engagement, une étape de montage de la boîte électrique (200 ; 260) dans ladite cavité (301), en engageant les rainures (214, 216 ; 268) prévues dans la paroi latérale (210 ; 261) de la boîte électrique (200 ; 260) sur les bras (14, 16 ; 614, 616 ; 714, 716 ; 814, 816) du connecteur (1 ; 600 ; 700 ; 800) de telle manière que l'ouverture d'accès (221) prévue dans ledit fond (220) se place en regard des bornes de sortie (31B, 32B, 33B) des éléments de connexion (31, 32, 33) du connecteur (1).

## Patentansprüche

1. Anordnung mit
- einem in eine Wand (300) einzulassenden Verbinder (1), der
• einen Sockel (10), der eine seitliche Eingangsöffnung (11; 60) für wenigstens einen elektrischen Leiter (401, 402, 403) abgrenzt und der einen vorderen Rand aufweist,
• wenigstens zwei getrennte Arme (14, 16), die sich vom Sockel (10) aus hauptsächlich vor dem vorderen Rand des Sockels (10) erstrecken und deren freie Enden Mittel (15, 17) zum Festhaken an der Wand (300) aufweisen, aufweist, und
- einer elektrischen Dose (200; 260), die dazu bestimmt ist, ein elektrisches Gerät aufzunehmen, und die Mittel zum Befestigen an der Wand (300) und eine Seitenwand (210; 261), die außen wenigstens zwei Rillen (214, 216; 268) zum Hindurchführen der Arme (14, 16; 614, 616) des Verbinders (1; 600; 700; 800) aufweist, aufweist und die hinten durch einen Boden (220) geschlossen ist,
**dadurch gekennzeichnet, daß** der Verbinder wenigstens ein am Sockel (10) befestigtes Verbindungselement (31, 32, 33) aufweist, das eine Eingangsklemme (31A, 32A, 33A) zum Verbinden des elektrischen Leiters (401, 402, 403) und eine von der Vorderseite des Sockels (10) her zugängliche Ausgangsklemme (31B, 32B, 33B) zum Verbinden wenigstens eines elektrischen Geräts aufweist, und
daß der Boden (220) der elektrischen Dose (200; 260) wenigstens eine Zugangsöffnung (221) zu den Ausgangsklemmen (31B, 32B, 33B) der Verbindungselemente (31, 32, 33) des Verbinders (1) aufweist.

2. Anordnung gemäß Anspruch 1, **dadurch gekennzeichnet, daß** der Sockel (10) eine Bodenwand (12) aufweist, die vorne von einem umlaufenden Rand (13) umgeben ist.

3. Anordnung mit
- einer in eine Wand (300) einzulassenden Halterung (610; 710; 810) für einen Verbinder, die
• eine umlaufende Wand (611; 711; 811), die wenigstens eine seitliche Eingangseinkerbung oder -öffnung (613; 713; 813) für wenigstens einen elektrischen Leiter aufweist und die einen vorderen Rand (619; 719; 819) aufweist,
• wenigstens zwei getrennte Arme (614, 616; 714, 716; 814, 816), die sich von der umlaufenden Wand (611; 711; 811) aus hauptsächlich vor dem vorderen Rand (619; 719; 819) der umlaufenden Wand (611; 711; 811) erstrecken und deren freie Enden Mittel (615, 617; 715, 717; 815, 817) zum Festhaken an der Wand (300) aufweisen,
aufweist, und
- einer elektrischen Dose (200; 260), die dazu bestimmt ist, ein elektrisches Gerät aufzunehmen, und die eine Seitenwand (210; 261), die außen wenigstens zwei Rillen (214, 216; 268) zum Hindurchführen der Arme (14, 16; 614, 616) der Halterung des Verbinders aufweist, aufweist und die hinten durch einen Boden (220) geschlossen ist,
**dadurch gekennzeichnet, daß** die umlaufende Wand (611; 711; 811) der Halterung (610; 710; 810) wenigstens eine Hauptöffnung (612; 712; 812) zum Aufnehmen einer Kassette (640, 650, 660, 670, 680) abgrenzt,
daß die Halterung (610; 710; 810) Mittel (620; 720; 820) zum Festhaken der Kassette (640, 650, 660, 670, 680) in der Hauptöffnung (612; 712; 812) aufweist, daß eine in eine Wand (300) einzulassende Verbinderkassette (650, 660, 670, 680) vorgesehen ist, die
• eine Bodenwand (651, 661, 671, 681),
• Mittel (652, 662, 672, 682) zum Festhaken der Bodenwand (651, 661, 671, 681) an der Halterung (610; 710; 810), und
• wenigstens ein an der Bodenwand (651, 661, 671, 681) befestigtes Verbindungselement, das eine Eingangsklemme zum Verbinden eines elektrischen Leiters und eine von der Vorderseite der Bodenwand (651, 661, 671, 681) aus zugängliche Ausgangsklemme zum Verbinden wenigstens eines elektrischen Geräts aufweist,
aufweist und
daß der Boden (220) der elektrischen Dose (200; 260) wenigstens eine Öffnung (221) für den Zugang zu den Ausgangsklemmen der Verbindungselemente der Kassette (650, 660, 670, 680) aufweist.

4. Anordnung gemäß dem vorangehenden Anspruch, bei der die umlaufende Wand (711; 811) der Halterung wenigstens zwei identische Hauptöffnungen (712; 812) abgrenzt und bei der die Halterung wenigstens drei getrennte Arme (714, 716; 814, 816) aufweist.

5. Anordnung gemäß einem der Ansprüche 3 und 4, bei der die Kassette (650, 660, 670, 680) in der Hauptöffnung (612; 712; 812) der Halterung (610; 710; 810) so befestigt ist, daß die Halterung (610; 710; 810) und die Bodenwand (651, 661, 671, 681) der Kassette (650, 660, 670, 680) gemeinsam einen vereinigten Sockel bilden.

6. Anordnung gemäß dem vorangehenden Anspruch, bei der die Mittel (620; 720; 820; 652, 662, 672, 682) zum Festhaken der Bodenwand (651, 661, 671, 681) an der Halterung (610; 710; 810) entriegelbare Einrastmittel sind.

7. Anordnung gemäß einem der Ansprüche 1 bis 6, bei der die Eingangsöffnung (11; 60; 613; 716; 813) in der Verlängerung eines ersten der Arme (14; 614; 714; 814) angeordnet ist.

8. Anordnung gemäß einem der Ansprüche 1 bis 7, bei der die Mittel zum Festhaken durch die freien Enden (15, 17; 615, 617; 715, 717; 815, 817) der Arme (14, 16; 614, 616; 714, 716; 814, 816) gebildet werden, die nach innen gebogen sind.

9. Anordnung gemäß einem der Ansprüche 1 bis 8, bei der ein Endstück (100) vorgesehen ist, das wenigstens einen Durchgang (101, 102) für den elektrischen Leiter (401, 402, 403) abgrenzt und das einen auf die Eingangsöffnung (11; 60) ausgerichteten Montageteil (110) für die Montage auf dem Sockel (10) und wenigstens einen Teil (120, 130, 140) zum Anbringen eines Wegeschlauchs (400), der den elektrischen Leiter (401, 402, 403) aufnimmt, aufweist.

10. Anordnung gemäß Anspruch 9, bei der der Montageteil (110) dazu ausgelegt ist, dem Endstück (100) gegenüber dem Sockel (10) wenigstens eine Drehbarkeit um eine gegenüber den Achsen, entlang derer sich die Arme (14, 16) erstrecken, geneigte Achse zu belassen, und bei der der Sockel (10) Rastmittel zum Blockieren der Drehung des Endstücks (100) gegenüber dem Sockel (10) aufweist.

11. Anordnung gemäß Anspruch 9, bei der der Montageteil (110) dazu ausgelegt ist, das Endstück (100) gegenüber dem Sockel (10) fest zu blockieren, und bei der jeder Teil zum Anbringen (120, 130) eine von Hand betätigbar flexible Zone (126, 136) zum Verbinden mit dem Montageteil (110) aufweist.

12. Anordnung gemäß Anspruch 9, bei der der Montageteil (110) Gleitschienenmittel (112A), die ermöglichen, das Endstück (100) auf die Achse der Eingangsöffnung (11; 60) zurückzubringen, und Rastzähne, die ermöglichen, das Endstück (100) gegenüber der Eingangsöffnung (11; 60) in dieser Stellung zu blockieren, aufweist.

13. Anordnung gemäß einem der Ansprüche 9 bis 12, bei der jeder Teil zum Anbringen (120, 130, 140) eine rohrförmige Leitung (121, 131) aufweist, die innen mit einem Mittel (122, 132) zum Rückhalten des Wegeschlauchs (400) ausgestattet ist, und bei der jede rohrförmige Leitung einen flexiblen Teil (120A, 130A, 140A) aufweist, der an seinem freien Ende durch eine feste Schelle (120B, 130B, 140B) verlängert ist.

14. Anordnung gemäß einem der Ansprüche 9 bis 13, bei der wenigstens zwei getrennte Teile (120, 130) zum Anbringen vorgesehen sind.

15. Anordnung gemäß den Ansprüchen 13 und 14, bei der sich die rohrförmigen Leitungen (121, 131) der beiden Teile zum Anbringen (120, 130) nebeneinander, parallel zueinander, erstrecken.

16. Anordnung gemäß einem der Ansprüche 9 bis 15, bei der jeder Teil zum Anbringen (120, 130) eine Folge von Rohren (125, 135) mit unterschiedlichen Durchmessern aufweist.

17. Anordnung gemäß einem der Ansprüche 9 bis 16, bei der das Endstück (100) durch Gießen in einem Stück gebildet ist.

18. Anordnung gemäß einem der Ansprüche 1 bis 17, bei der der Sockel (10) eine Bodenwand (12, 651, 661, 671, 681) aufweist, die auf der Vorderseite Trennwände (20) aufweist, und bei der diese Trennwände (20) getrennte Aufnahmeräume (21, 22, 23) abgrenzen, die die Verbindungselemente (31, 32, 33) aufnehmen.

19. Anordnung gemäß einem der Ansprüche 1 bis 18, bei der die Eingangsklemme (31A, 32A, 33A) jedes Verbindungselements (31, 32, 33) wenigstens einen Spalt aufweist, dessen Ränder scharf sind, um die Isolationsschläuche der elektrischen Leiter (401, 402, 403) durchzutrennen.

20. Anordnung gemäß dem vorangehenden Anspruch, bei der die Eingangsklemme (31A, 32A, 33A) jedes Verbindungselements (31, 32, 33) mit einem Betätigungshebel (41, 42, 43) versehen ist, der dazu ausgelegt ist, den elektrischen Leiter (401, 402, 403) zu zwingen, in den Spalt einzutreten.

21. Anordnung gemäß dem vorangehenden Anspruch, bei der der Sockel (10) eine Bodenwand (12, 651, 661, 671, 681) aufweist und bei der jeder Betätigungshebel (41, 42, 43) um eine zur Bodenwand (12, 651, 661, 671, 681) parallele Achse drehbar angebracht ist.

22. Anordnung gemäß dem vorangehenden Anspruch, bei der die rechtwinkligen Projektionen der Drehachse wenigstens eines Betätigungshebels (41, 42, 43) und der Achse der Eingangsöffnung (11) auf die Ebene der Vorderseite der Bodenwand parallel sind.

23. Anordnung gemäß einem der Ansprüche 1 bis 22, bei der mehrere Verbindungselemente (31, 32, 33) vorgesehen sind, die so angeordnet sind, daß deren Ausgangsklemmen (31B, 32B, 33B) aneinander angrenzen und daß deren Eingangsklemmen (31A, 32A, 33A) voneinander beabstandet angeordnet sind.

24. Anordnung gemäß dem vorangehenden Anspruch, bei der eine Kappe (50) zur Isolation der Verbindungselemente (31, 32, 33) vorgesehen ist, die Mittel zum Befestigen am Sockel (10) und wenigstens eine Öffnung für den Zugang zu einer Ausgangsklemme (31B, 32B, 33B) der Verbindungselemente (31, 32, 33) aufweist.

25. Anordnung gemäß einem der Ansprüche 1 bis 24, bei der der Sockel (510) wenigstens zwei getrennte Stellen (510A, 510B) abgrenzt, in denen jeweils eine Eingangsöffnung (511) und wenigstens zwei Verbindungselemente vorgesehen sind, und bei der wenigstens drei getrennte Arme (514, 516) vorgesehen sind.

26. Anordnung gemäß einem der Ansprüche 1 bis 25, bei der die Seitenwand (210) der elektrischen Dose (200) hinten durch einen Boden (220) geschlossen ist, der wenigstens eine Öffnung (221) für den Zugang zu den Ausgangsklemmen (31B, 32B, 33B) der Verbindungselemente (31, 32, 33) des Verbinders (1) aufweist, und bei der die Zugangsöffnung (221) durch einen abnehmbaren oder ausbrechbaren Deckel (222) geschlossen ist.

27. Anordnung gemäß dem vorangehenden Anspruch, bei der der Rand der Zugangsöffnung (221) mit einem Dichtungsring (224) bedeckt ist.

28. Anordnung gemäß den beiden vorangehenden Ansprüchen, bei der der Deckel (222) auf einen Teil des Bodens (220) so aufgeformt ist, daß er einerseits eine Verdickung, die innen am Rand der Zugangsöffnung (221) entlangläuft, um den Dichtring (224) zu bilden, und andererseits eine Aufreißlinie geringerer Dicke, die innen am Rand der Verdickung entlangläuft, aufweist.

29. Anordnung gemäß einem der Ansprüche 1 bis 28, bei der die Seitenwand (210) der elektrischen Dose (200) vorne mit einem äußeren Steg (230) umrandet ist, der für das Hindurchreichen der Arme (14, 16) des Verbinders (1) unterbrochen ist.

30. Verfahren zum Montieren einer Anordnung gemäß einem der Ansprüche 1 bis 29 in einem in einer Wand (300) ausgebildeten Hohlraum (301), das Schritte aufweist, die darin bestehen,
- einen elektrischen Leiter (401, 402, 403) durch die Zugangsöffnung (11; 613, 713, 813) des Sockels (10) des Verbinders (1; 600; 700; 800) einzuziehen,
- den elektrischen Leiter (401, 402, 403) mit der Eingangsklemme (31A, 32A, 33A) des Verbindungselements (31, 32, 33) des Verbinders (1; 600; 700; 800) zu verbinden,
- den Verbinder (1; 600; 700; 800) so in den Hohlraum (301) einzusetzen, daß sich die an den freien Enden der Arme (14, 16; 616, 617; 714, 716; 814, 816) vorgesehenen Mittel zum Festhaken (15, 17; 615, 617; 715, 715; 815, 815) an der Wand (300) festhaken.

31. Montageverfahren gemäß dem vorangehenden Anspruch, das nach dem Schritt des Einsetzens einen Schritt des Montierens der elektrischen Dose (200; 260) im Hohlraum (301) aufweist, bei dem die in der Seitenwand (210; 261) der elektrischen Dose (200; 260) vorgesehenen Rillen (214, 216; 268) so auf die Arme (14, 16; 614, 616; 714, 716; 814, 816) des Verbinders (1; 600; 700; 800) aufgesetzt werden, daß sich die im Boden (220) vorgesehene Zugangsöffnung (221) gegenüber den Ausgangsklemmen (31B, 32B, 33B) der Verbindungselemente (31, 32, 33) des Verbinders (1) anordnet.

## Claims

1. An assembly comprising:
• a connector (1; 600; 700; 800) for flush mounting in a wall (300), said connector comprising:
• a base (10) that defines an inlet opening (11; 60) for at least one electrical conductor (401, 402, 403), and that presents a front edge; and
• at least two distinct arms (14, 16) that extend from the base (10), mainly at the front of the front edge of the base (10), and having free ends that present catch means (15, 17) for catching on the wall (300), and
• an electrical box (200; 260) for receiving an electrical accessory and including means for its attachment to the wall (300) and a side wall (210; 261) that externally presents at least two grooves (214, 216; 268) for passing the arms (14, 16; 614, 616) of the connector (1; 600; 700; 800), and that is closed at the rear by a rear wall (220),
the assembly being **characterized in that** it includes at least one connection element (31, 32, 33) that is fastened to the base (10) and that includes an inlet terminal (31A, 32A, 33A) for connecting said electrical conductor (401, 402, 403), and an outlet terminal (31B, 32B, 33B) that is accessible via the front of the base (10) for connecting at least one electrical accessory,
and
**in that** the rear wall (220) of the electrical box (200; 260) presents at least one access opening (221) for accessing the outlet terminals (31B, 32B, 33B) of the connection elements (31, 32, 33) of the connector (1) ·

2. The assembly according to claim 1, wherein the base (10) includes a rear wall (12) that is bordered at the front by a peripheral rim (13).

3. Assembly comprising:
- a connector support (610; 710; 810) for flush mounting in a wall (300), said connector support comprising:
• a peripheral wall (611; 711; 811) that defines at least one side notch or inlet opening (613; 713; 813) for at least one electrical conductor, and that presents a front edge (619; 719; 819);
• at least two distinct arms (614, 616; 714, 716; 814, 816) that extend from the peripheral wall (611; 711; 811), mainly at the front of the front edge (619; 719; 819) of the peripheral wall (611; 711; 811), and having free ends that present catch means (615, 617; 715, 717; 815, 817) for catching on the wall (300), and
- an electrical box (200; 260) for receiving an electrical accessory and including a side wall (210; 261) that externally presents at least two grooves (214, 216; 268) for passing the arms (14, 16; 614, 616) of the connector (1; 600; 700; 800), and that is closed at the rear by a rear wall (220),
**characterized in that** the peripheral wall (611; 711; 811) of said connector support (610; 710; 810) defines at least one main opening (612; 712; 812) for receiving a cartridge (640, 650, 660, 670, 680),
**in that** said connector support (610; 710; 810) comprises catch means (620; 720; 820) for catching said cartridge (640, 650, 660, 670, 680) in said main opening (612; 712; 812),
**in that** it is provided a connector cartridge (650, 660, 670, 680) for flush mounting in a wall (300), said connector cartridge comprising:
• a rear wall (651, 661, 671, 681);
• catch means (652, 662, 672, 682) for catching the rear wall (651, 661, 671, 681) on a support (610; 710; 810); and
• at least one connection element that is fastened to the rear wall (651, 661, 671, 681) and that includes an inlet terminal for connecting an electrical conductor, and an outlet terminal that is accessible via the front of the rear wall (651, 661, 671, 681) for connecting at least one electrical accessory, and
**in that** the rear wall (220) of the electrical box (200; 260) presents at least one access opening (221) for accessing the outlet terminals of the connection element of the connector cartridge (650, 660, 670, 680) ·

4. Assembly according to the preceding claim, wherein the peripheral wall (711; 811) of the support defines at least two identical main openings (712; 812), and wherein at least three distinct arms (714, 716; 814, 816) are provided.

5. Assembly according to claim 3 or 4, wherein the cartridge (650, 660, 670, 680) is fastened in the main opening (612; 712; 812) of said support (610; 710; 810), such that the support (610; 710; 810) and the rear wall (651, 661, 671, 681) of the cartridge (650, 660, 670, 680) co-operate with each other to form a single base.

6. Assembly according to the preceding claim, wherein the catch means (620, 720, 820; 652, 662, 672, 682) for catching the rear wall (651, 661, 671, 681) on the support (610; 710; 810) are unlockable snap-fastener means.

7. Assembly according to any one of claims 1 to 6, wherein said inlet opening (11; 60; 613; 716; 813) is situated in alignment with a first of the arms (14; 614; 714; 814).

8. Assembly according to any one of claims 1 to 7, wherein said catch means are formed by the free ends (15, 17; 615, 617; 715, 717; 815, 817) of the arms (14, 16; 614, 616; 714, 716; 814, 816), which free ends are curved outwards.

9. Assembly according to any one of claims 1 to 8, wherein an endpiece (100) is provided that defines at least one passage (101, 102) for passing said electrical conductor (401, 402, 403), and that includes a mounting portion (110) for mounting it on the base (10), on the axis of said inlet opening (11; 60), and at least one securing portion (120, 130, 140) for securing a routing conduit (400) that houses said electrical conductor (401, 402, 403).

10. Assembly according to claim 9, wherein the mounting portion (110) is shaped to allow the endpiece (100) at least one freedom to move in pivoting relative to the base (10), about an axis that slopes relative to the axes on which the arms (14, 16) extend, and wherein the base (10) includes indexer means for blocking the pivoting of the endpiece (100) relative to the base (10).

11. Assembly according to claim 9, wherein the mounting portion (110) is shaped so as to block the endpiece (100) in stationary manner relative to the base (10), and wherein each securing portion (120, 130) includes a junction zone (126, 136) at said mounting portion (110) that is flexible manually.

12. Assembly according to claim 9, wherein the mounting portion (110) includes slide means (112A) that make it possible to bring the endpiece (100) onto the axis of the inlet opening (11; 60), and snap-fastener teeth that make it possible to block the endpiece (100) in this position relative to the inlet opening (11; 60).

13. Assembly according to any one of claims 9 to 12, wherein each securing portion (120, 130, 140) comprises a tubular duct (121, 131) that is provided internally with holder means (122, 132) for holding the routing conduit (400) and wherein each tubular duct comprises a flexible portion (120A, 130A, 140A) that is extended at its free end by a rigid collar (120B, 130B, 140B).

14. Assembly according to any one of claims 9 to 13, wherein at least two distinct securing portions (120, 130) are provided.

15. Assembly according to any one of claims 13 and 14, wherein the tubular ducts (121, 131) of the two securing portions (120, 130) extend side-by-side, parallel to each other.

16. Assembly according to any one of claims 9 to 15, wherein each securing portion (120, 130) comprises a succession of tubes (125, 135) of different diameters.

17. Assembly according to any one of claims 9 to 16, wherein said endpiece (100) is formed as a single piece by molding.

18. Assembly according to any one of claims 1 to 17, wherein the base (10) includes a rear wall (12, 651, 661, 671, 681) that, on its front face, carries partitions (20), the partitions (20) defining insulated reception housings (21, 22, 23) that receive said connection elements (31, 32, 33).

19. Assembly according to any one of claims 1 to 18, wherein the inlet terminal (31A, 32A, 33A) of each connection element (31, 32, 33) presents at least one slot having edges that are sharp so as to cut the insulation of the electrical conductors (401, 402, 403).

20. Assembly according to the preceding claim, wherein the inlet terminal (31A, 32A, 33A) of each connection element (31, 32, 33) is fitted with an operating lever (41, 42, 43) that is adapted to force the electrical conductor (401, 402, 403) into said slot.

21. Assembly according to the preceding claim, wherein, since the base (10) includes a rear wall (12, 651, 661, 671, 681), each operating lever (41, 42, 43) is mounted to pivot about an axis that is parallel to the rear wall (12, 651, 661, 671, 681).

22. Assembly according to the preceding claim, wherein in orthogonal projections onto the plane of the front face of the rear wall, the pivot axis of at least one operating lever (41, 42, 43) and the axis of the inlet opening (11) are parallel.

23. Assembly according to any one of claims 1 to 22, wherein a plurality of connection elements (31, 32, 33) are provided that are arranged in such a manner that their outlet terminals (31B, 32B, 33B) are contiguous, and that their inlet terminals (31A, 32A, 33A) are situated at a distance from one another.

24. Assembly according to the preceding claim, wherein a cap (50) is provided for insulating said connection elements (31, 32, 33), which cap includes fastener means for fastening to the base (10) and at least one access opening for accessing one of the outlet terminals (31B, 32B, 33B) of the connection elements (31, 32, 33).

25. Assembly according to any one of claims 1 to 24, wherein the base (510) defines at least two distinct stations (510A, 510B) in each of which an inlet opening (511) and at least two connection elements are provided, and wherein at least three distinct arms (514, 516) are provided.

26. Assembly according to any one of claims 1 to 25, wherein the side wall (210) of the electrical box (200) is closed at the rear by a rear wall (220) that presents at least one access opening (221) for accessing the outlet terminals (31B, 32B, 33B) of the connection elements (31, 32, 33) of the connector (1), and wherein said access opening (221) is closed by a diaphragm (222) that is detachable or can be knocked out.

27. Assembly according to the preceding claim, wherein the edge of said access opening (221) is covered by a sealing gasket (224).

28. Assembly according to the two preceding claims, wherein said diaphragm (222) is overmolded on a portion of the rear wall (220) so as to present firstly a bulge that extends internally around the edge of said access opening (221) so as to form said sealing gasket (224), and secondly a breakable line of weakness that internally extends the edge of said bulge.

29. Assembly according to any one of claims 1 to 28, wherein the side wall (210) of the electrical box (200) is bordered at the front by an outer collar (230) that is interrupted for passing the arms (14, 16) of the connector (1).

30. A method of mounting an assembly according to any one of claims 1 to 29 in a cavity (301) formed in a wall (300), the method comprising the steps consisting in:
• threading an electrical conductor (401, 402, 403) through the inlet opening (11; 613, 713, 813) of the base (10) of the connector (1; 600; 700; 800);
• connecting said electrical conductor (401, 402, 403) to the inlet terminal (31A, 32A, 33A) of the connection element (31, 32, 33) of the connector (1; 600; 700; 800); and
• engaging the connector (1; 600; 700; 800) in said cavity (301) in such a manner that the catch means (15, 17; 615, 617; 715, 715; 815, 815) provided at the free ends of the arms (14, 16; 616, 617; 714, 716; 814, 816) catch on the wall (300).

31. A method of mounting according to the preceding claim comprising, after said step of engaging, a step of mounting the electrical box (200; 260) in said cavity (301), by engaging the grooves (214, 216; 268) provided in the side wall (210; 261) of the electrical box (200; 260) on the arms (14, 16; 614, 616; 714, 716; 814, 816) of the connector (1; 600; 700; 800) so that the access opening (221) provided in said rear wall (220) is positioned facing the outlet terminals (31B, 32B, 33B) of the connection elements (31, 32, 33) of the connector (1).
